# EUROPÄISCHE PATENTSCHRIFT

(11) **EP 1 480 987 B1**
(45) Veröffentlichungstag und Bekanntmachung des Hinweises auf die Patenterteilung: **29.07.2009**
(21) Anmeldenummer: 03722330.2
(22) Anmeldetag: 26.02.2003
(51) Int. Cl.: C07F 7/00

(54) **KOVALENT FIXIERTE NON-METALLOCENE, VERFAHREN ZUR HERSTELLUNG VON DIESEN UND DEREN VERWENDUNG ZUR POLYMERISATION VON OLEFINEN**
COVALENTLY FIXED NON-METALLOCENES, METHOD FOR THE PRODUCTION THEREOF AND THEIR USE FOR POLYMERIZING OLEFINS
COMPOSES NON METALLOCENES FIXES DE FA ON COVALENTE, PROCEDE DE FABRICATION DE CEUX-CI ET UTILISATION POUR LA POLYMERISATION D'OLEFINES

(30) Priorität: 26.02.2002 DE 10208252
(43) Veröffentlichungstag der Anmeldung: 01.12.2004
(60) Teilanmeldung: 08014356.3
(73) Patentinhaber: Celanese Holding GmbH, 61476 Kronberg im Taunus (DE)
(72) Erfinder: SCHOTTEK, Jörg, 60487 Frankfurt (DE); SCHULTE, Jörg, Ludwig, 60487 Frankfurt (DE); DICKNER, Tim, 60486 Frankfurt (DE); KUELLMER, Iris, 65929 Frankfurt (DE)
(86) Internationale Anmeldenummer: PCT/EP2003/001934
(87) Internationale Veröffentlichungsnummer: WO 2003/072584

(56) Entgegenhaltungen:
- EP-A- 0 874 005
- EP-A- 1 013 674

## Beschreibung

Die vorliegende Erfindung betrifft ein Verfahren zur Herstellung von speziellen Übergangsmetallverbindungen, neue Übergangsmetallverbindungen und deren Verwendung zur Polymerisation von Olefinen.

In den letzten Jahren wurden zur Olefinpolymerisation neben herkömmlichen Ziegler-Katalysatoren Metallocene verwendet um Polyolefine mit besonderen Eigenschaften zu generieren, die man mit herkömmlichen Ziegler-Katalysatoren nicht erreicht. Metallocene können, gegebenenfalls in Kombination mit einem oder mehreren Cokatalysatoren, als Katalysatorkomponente für die Polymerisation und Copolymerisation von Olefinen verwendet werden. Insbesondere werden als Katalysatorvorstufen halogenhaltige Metallocene eingesetzt, die sich beispielsweise durch ein Aluminoxan in einen polymerisationsaktiven kationischen Metallocenkomplex überführen lassen.

Die Darstellung und Verwendung von Metallocenen stellt aber heute noch einen Kostenfaktor dar, welcher weder durch erhöhte Aktivität noch durch verbesserte Synthesemethoden überwunden werden konnte. Zudem stellt die Heterogenisierung solcher Katalysatoren ein weiteres Problem dar, da hier vor allem die Aktivitäten einen starken Einbruch gegenüber der homogen geführten Polymerisation erleiden.

In der Literatur sind verschiedene "Non-Metallocene" beschrieben wie z.B. in EP-A-874 005 und EP-A-1013674, die sich durch Vorteile in der Darstellbarkeit und den Kosten der Edukte auszeichnen. Die hohen Aktivitäten dieser Komplexe stellen einen weiteren kostensparenden Faktor dar.
Diese Verbindungen werden zum Teil geträgert um eine bessere Morphologie des Polymers zu gewährleisten. Da diese Verbindungen aber nur physisorbiert auf dem Trägermaterial vorliegen, kommt es bei der Polymerisation zum Ablösen des Katalysatorsystems (Ausbluten). Dieses Phänomen ist nicht erwünscht und führt zu Polymeren mit schlechten Morphologien.

Es bestand somit die Aufgabe, neue Metallkatalysatoren zu entwickeln, die einen neuen vorteilhaften Zugang zu Polyolefinen ermöglichen und dabei die Nachteile des beschriebenen Stands der Technik vermeiden.

Es wurde nun überraschenderweise gefunden, daß ausgehend von substituierten oder unsubstituierten Aminophasen (Aminfunktionen die über einen Spacer an Silica gebunden sind) und substituierten oder unsubstituierten Salicylaldeyden kovalent gebundene neue Ligandenstruktur aufgebaut werden kann, die anschließend durch Umsetzung mit Metallverbindungen neuartige kovalent gebundene Metallkomplexe liefert. Diese Darstellungsweise stellt einen universellen Zugang zu dieser neuartigen Verbindungsklasse dar. Durch diese Verbindungen wird somit die der Erfindung zugrundeliegende Aufgabe gelöst.

Gegenstand der vorliegenden Erfindung sind Verbindungen der Formel (I) 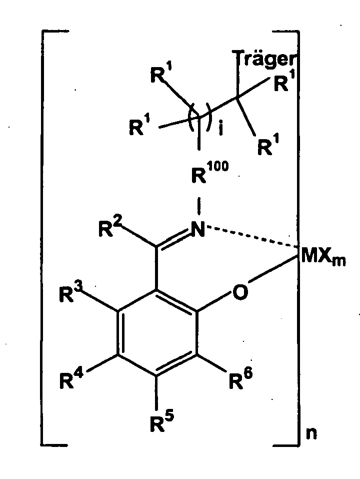 worin
- M¹: ein Metall der III., IV., V. oder VI. Nebengruppe des Periodensystems der Elemente ist, insbesondere Ti, Zr, Hf, Ni, Co, Fe, Pd, Sc, Cr und Nb
- R¹: ein Wasserstoffatom ist,
- R², R³,: R⁴, R⁵, R⁶ gleich oder verschieden sind und ein Wasserstoffatom, ein Halogenatom oder Si(R¹⁰)₃ sind, worin R¹⁰ gleich oder verschieden und ein Wasserstoffatom oder eine C₁-C₄₀-kohlenstoffhaltige Gruppe sind, oder R¹, R², R³, R⁴, R⁵, R⁶ gleich oder verschieden sind und eine C₁-C₃₀- kohlenstoffhaltige Gruppe ist, oder zwei oder mehrere Reste R¹ und/oder zwei oder mehrere Reste R² bis R⁶ so miteinander verbunden sein können, daß die Reste R¹ oder R² bis R⁶ und R¹⁰ und die sie verbindenden Atome ein C₄-C₂₄-Ringsystem bilden, welches seinerseits substituiert sein kann, und
- R¹⁰⁰: gleich oder verschieden sind und eine C₁-C₄₀-kohlenstoffhaltige Gruppe sein können, und
- n: eine ganze Zahl von 1 bis 4, bevorzugt 2 ist, und
- m: eine ganze Zahl von 0 bis 4, bevorzugt 2 ist, und
- i: eine ganze Zahl von 1 bis 100, bevorzugt 1 bis 50 ist, und
- X: gleich oder verschieden sein können und ein Wasserstoffatom, eine C₁-C₁₀-Kohlenwasserstoffgruppe wie C₁-C₁₀-Alkyl oder C₆-C₁₀-Aryl, ein Halogenatom, oder OR⁹, SR⁹, OSiR₃⁹, SiR₃⁹, PR₂⁹ oder NR₂⁹ bedeuten, worin R⁹ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind und "Träger" Silica ist, an welches die Gruppen -(CR¹₂)ᵢ-CR¹₂ folgendermaßen angebunden sind: -(CR¹₂)ᵢ-CR¹₂-O-Si- Träger.

Im Rahmen der vorliegenden Erfindung werden unter einer C₁-C₄₀-kohlenstoffhaltigen Gruppe bevorzugt die Reste C₁-C₄₀-Alkyl, insbesondere C₁-C₂₀-Alkyl, besonders bevorzugt Methyl, Ethyl, n- oder i-Propyl, tert.-Butyl, n-Pentyl, n-Hexyl, Cyclohexyl oder Octyl, C₁-C₁₀-Fluoralkyl, C₁-C₁₂-Alkoxy, C₆-C₂₀-Aryl, insbesondere Phenyl und Biphenyl, C₆-C₁₀-Fluoraryl, insbesondere Tetrafluorophenyl, C₆-C₁₀-Aryloxy, C₂-C₁₀-Alkenyl-, C₇-C₄₀-Arylalkyl, C₇-C₄₀-Alkylaryl, C₅-C₂₄-Heteroaryl oder C₈-C₄₀-Arylalkenyl verstanden.

Im Rahmen der vorliegenden Erfindung werden unter dem Begriff einer C₁-C₃₀-kohlenstoffhaltigen Gruppe bevorzugt C₁-C₃₀-Alkyl; insbesondere Methyl, Ethyl, n- oder i-Propyl, tert.-Butyl, n-Pentyl, n-Hexyl, Cyclohexyl oder Octyl, C₂-C₂₅-Alkenyl, C₃-C₁₅-Alkylalkenyl, C₆-C₂₄-Aryl, insbesondere Phenyl und Biphenyl, C₅-C₂₄-Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, insbesondere Tetrafluorophenyl, fluorhaltiges C₇-C₃₀-Arylalkyl, fluorhaltiges C₇-C₃₀-Alkylaryl oder C₁-C₁₀-Alkoxy verstanden.

Besonders bevorzugte sind Verbindungen der Formel (I) worin
- M¹: gleich Ti, Zr oder Hf ist, besonders bevorzugt Zirkonium, ist und
- R¹, R²,: R³, R⁴, R⁵, R⁶ gleich oder verschieden sind und ein Wasserstoffatom, ein Halogenatom oder Si(R¹⁰)₃ sind, worin R¹⁰ gleich oder verschieden ein Wasserstoffatom oder eine C₁-C₄₀-kohlenstoffhaltige Gruppe die die oben stehenden Bedeutungen hat oder R¹, R², R³, R⁴, R⁵, R⁶ gleich oder verschieden sind und eine C₁-C₃₀ - kohlenstoffhaltige Gruppe die die oben stehenden Bedeutungen hat , und oder zwei oder mehrere Reste R¹ und/oder zwei oder mehrere Reste R² bis R⁶ so miteinander verbunden sein können, daß die Reste R¹ oder R² bis R⁶ und R¹⁰ und die sie verbindenden Atome ein C₄-C₂₄-Ringsystem bilden, welches seinerseits substituiert sein kann, und
- R¹⁰⁰: gleich oder verschieden sind und eine C₁-C₄₀-kohlenstoffhaltige Gruppe ist und,
- n: eine ganze Zahl von 1 bis 4, bevorzugt 2 ist, und
- m: eine ganze Zahl von 0 bis 4, bevorzugt 2 ist, und
- i: eine ganze Zahl von 1 bis 100, bevorzugt 2 ist, und
- X: ein Halogenatom, insbesondere Chlor ist oder eine C₁-C₁₈-Alkylgruppe ist, besonders bevorzugt Methyl, Ethyl, n- oder i-Propyl, tert.-Butyl, n-Pentyl, n-Hexyl, Cyclohexyl oder Octyl, oder eine C₆-C₁₅- Arylgruppe, oder substituierte oder unsubstituierte Phenolate ist.

Ganz besonders bevorzugt sind Verbindungen der Formel (I),
worin
- M¹: gleich Zirkonium ist,
- R¹, R²,: R³, R⁴, R⁵, R⁶ ein Wasserstoffatom oder eine lineare oder verzweigte C₁-C₁₂-Alkylgruppe, bevorzugt Methyl, Ethyl, n-Butyl, n-Hexyl, Isopropyl, Isobutyl, Isopentyl, Cyclohexyl, Cyclopentyl oder Octyl ist, besonders bevorzugt Methyl, Ethyl, Isopropyl oder Cyclohexyl ist, oder ein Halogenatom oder C₅-C₁₈-Heteroaryl, oder eine C₇-C₁₂-Arylalkyl, oder eine C₇-C₁₂-Alkylaryl, oder ein fluorhaltiges C₁-C₈-Alkyl, oder ein fluorhaltiges C₆₋C₁₈-Aryl, oder ein fluorhaltiges C₇-C₁₂-Arylalkyl oder fluorhaltiges C₇-C₁₂-Alkylaryl ist, und
- R¹⁰⁰: gleich oder verschieden ist und für C₁-C₂₀-Alkyl, insbesondere Methylen, Ethylen, C₁-C₁₀-Fluoralkyl, C₁-C₁₀-Alkoxy, C₆-C₁₀-Aryl, insbesondere Phenyl, Biphenyl, C₆-C₁₀-Fluoraryl, insbesondere 1,2,4,5-Tetrafluorophenyl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl, fluorhaltiges C₁-C₂₅-Alkyl steht, und
- n: 2 ist, und
- m: 2 ist, und
- i: 3, 4, 5, 6, 7, 8, 9 oder 10 ist, und
- X: ein Halogenatom, insbesondere Chlor ist, oder eine C₁-C₁₈-Alkylgruppe, insbesondere Methyl, Ethyl, n-Butyl, n-Hexyl, Isopropyl, Isobutyl, lsopentyl, Cyclohexyl, Cyclopentyl oder Octyl ist oder eine C₆-C₁₅-Arylgruppe ist, oder substituierte oder unsubstituierte Phenolate ist.

Erläuternde, jedoch nicht einschränkende Beispiele für Verbindungen der Formel I sind: 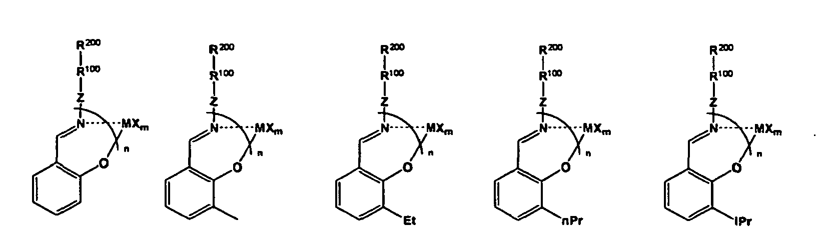 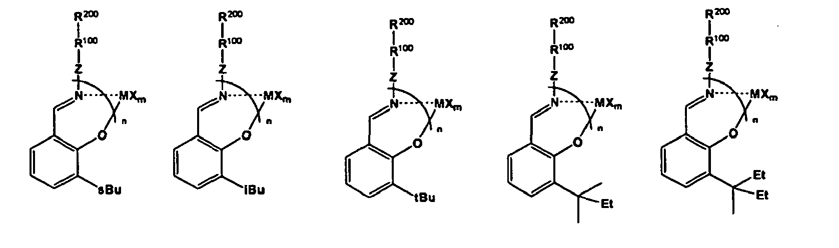 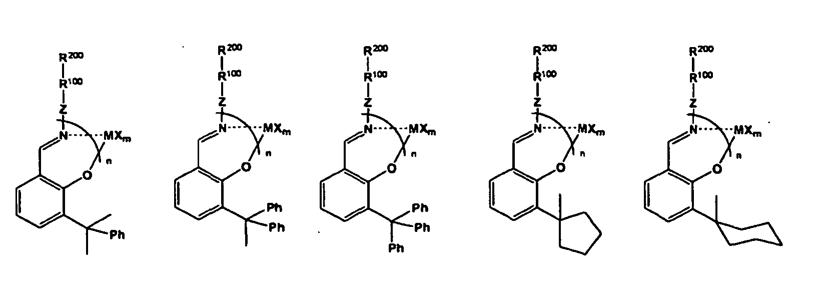 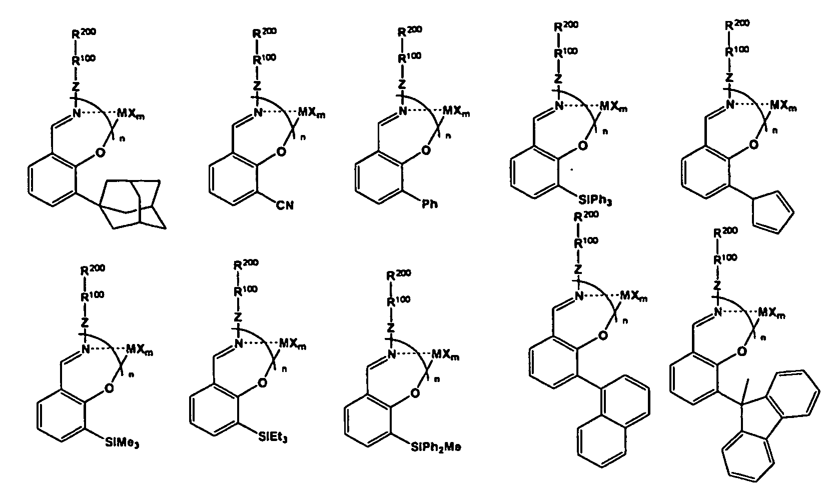 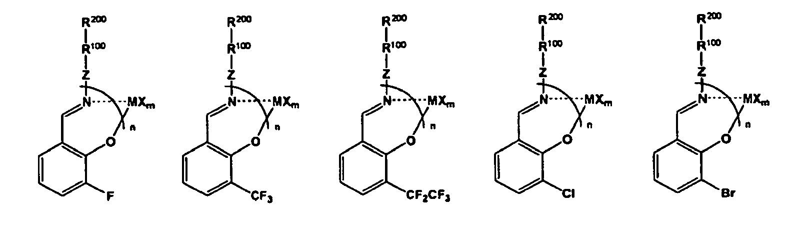 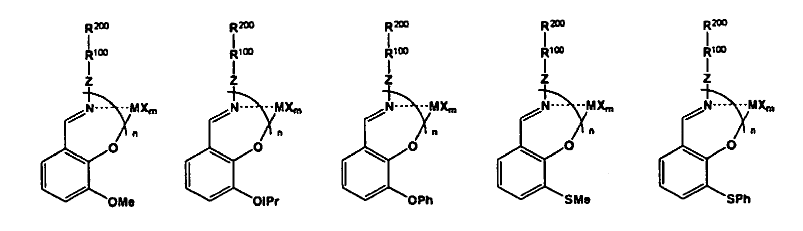 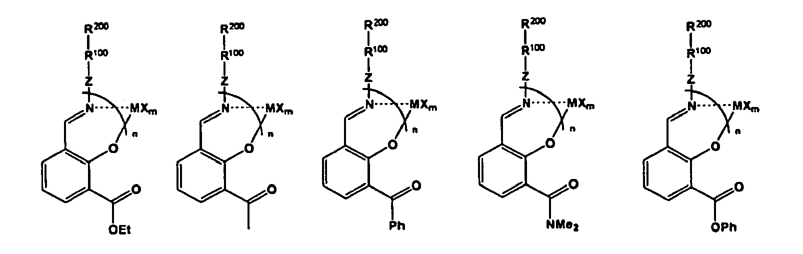 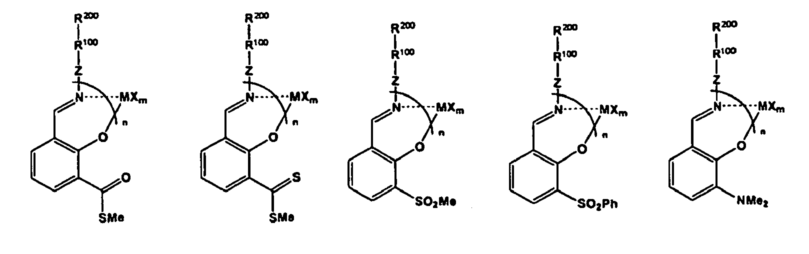 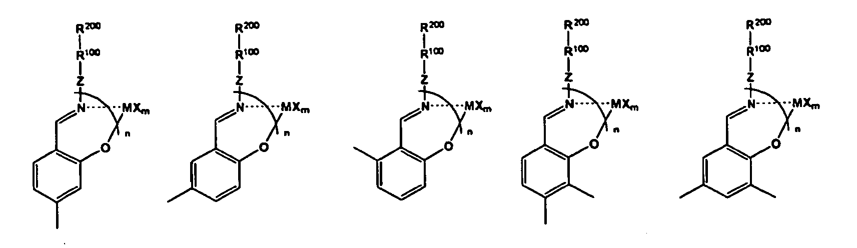 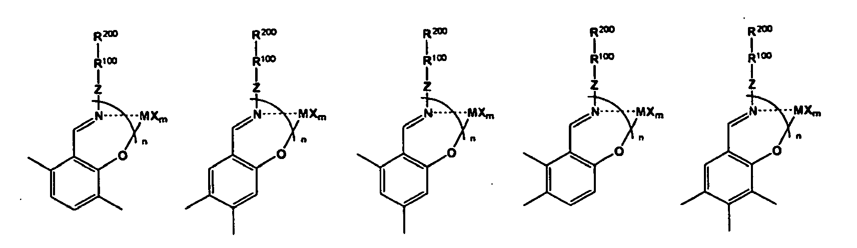 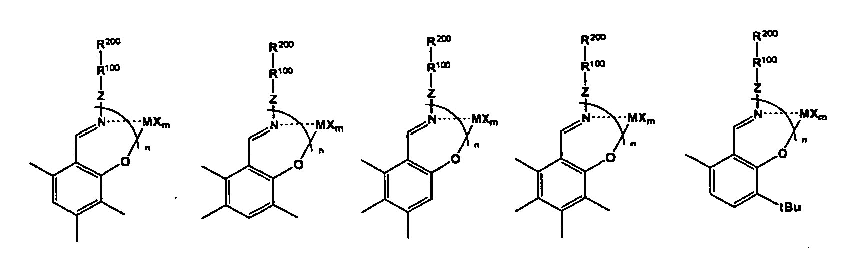 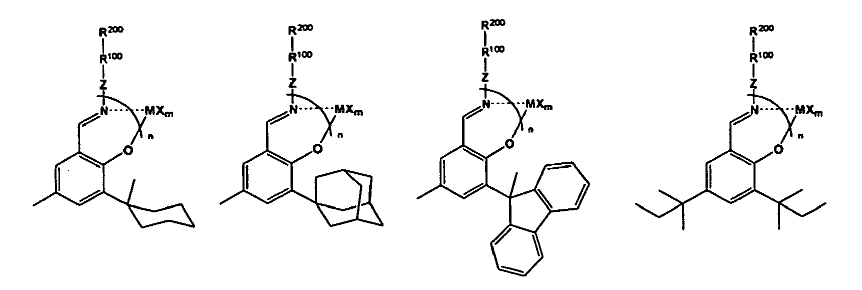 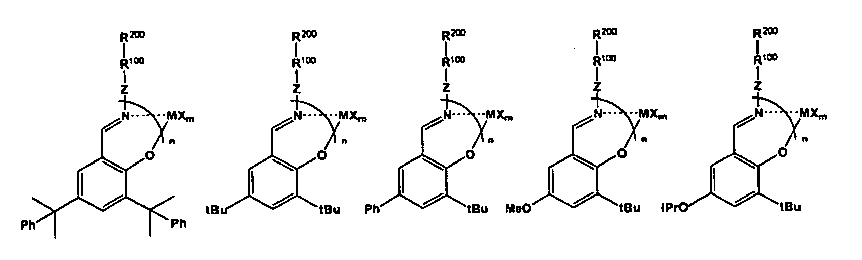 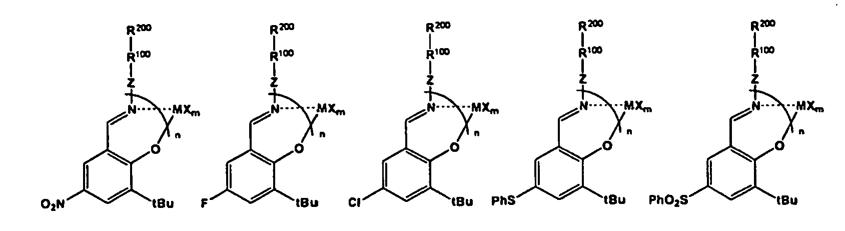 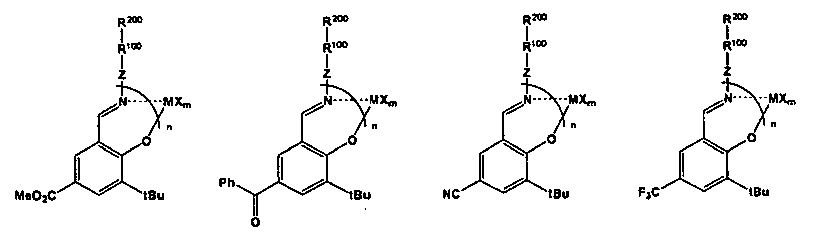 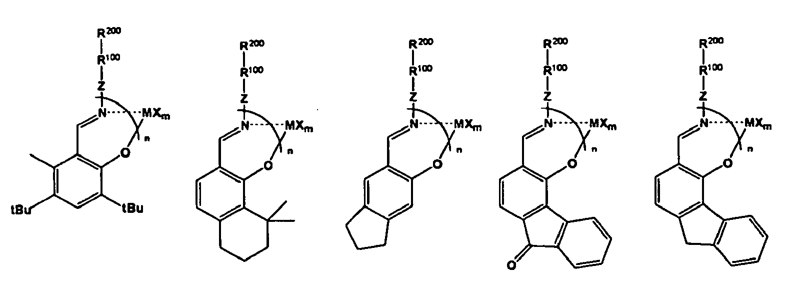 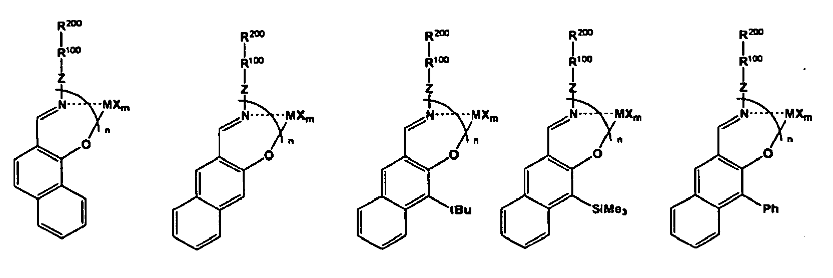 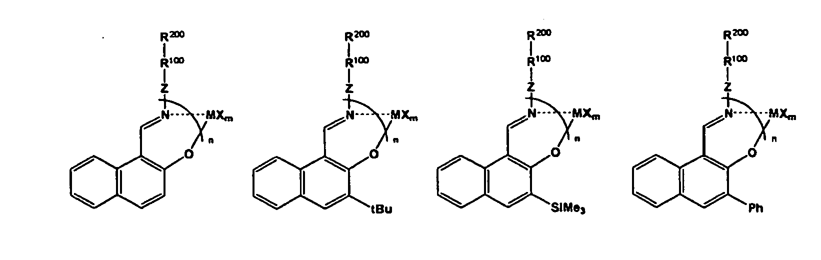 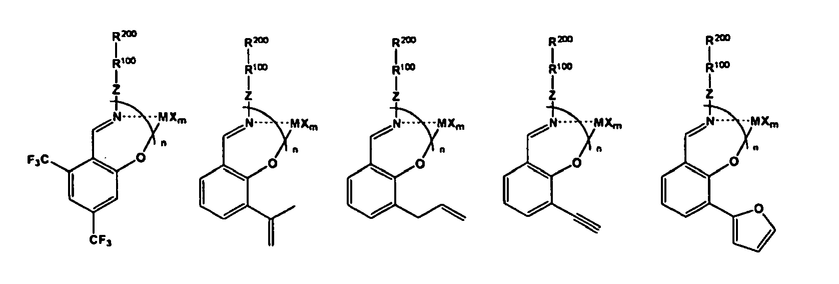 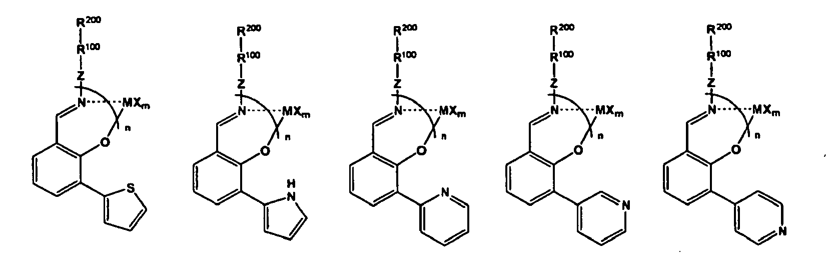 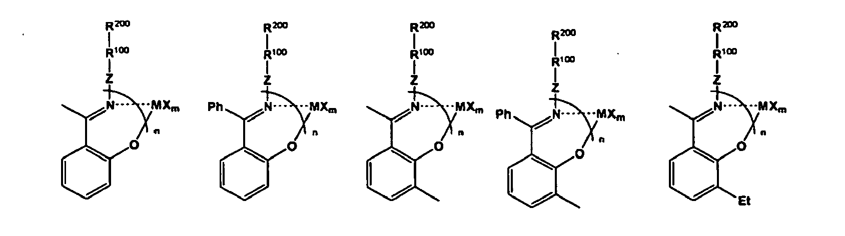 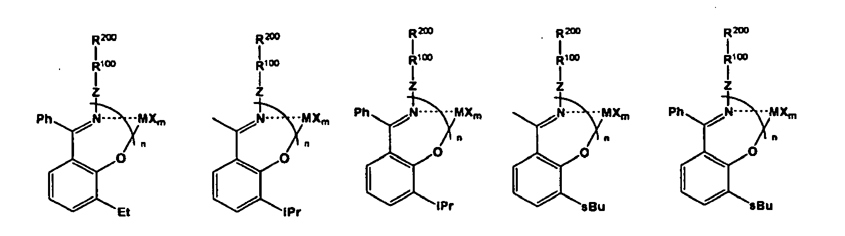 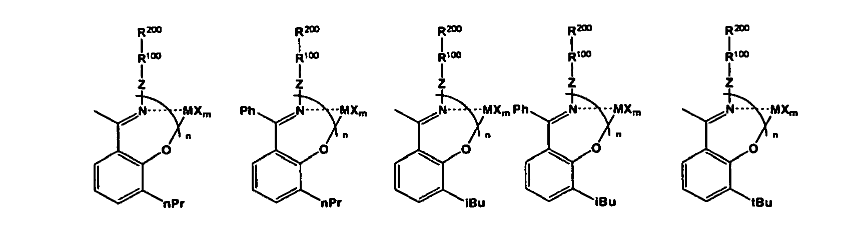 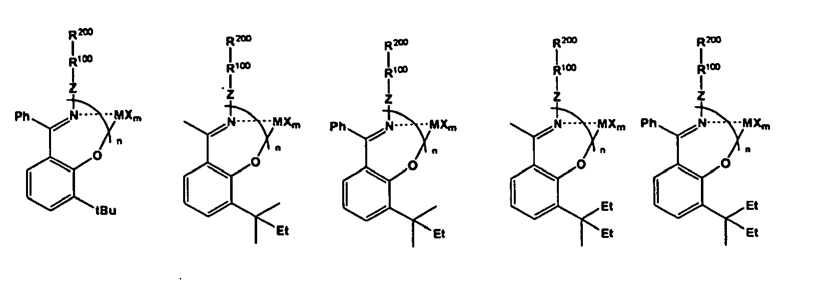 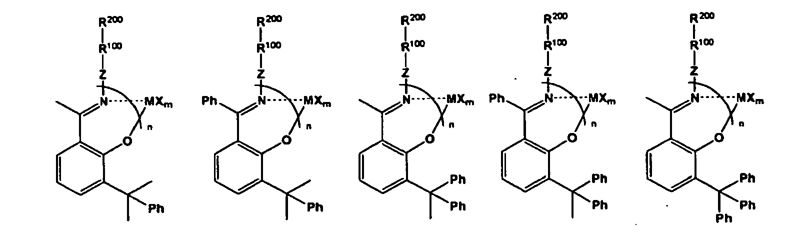 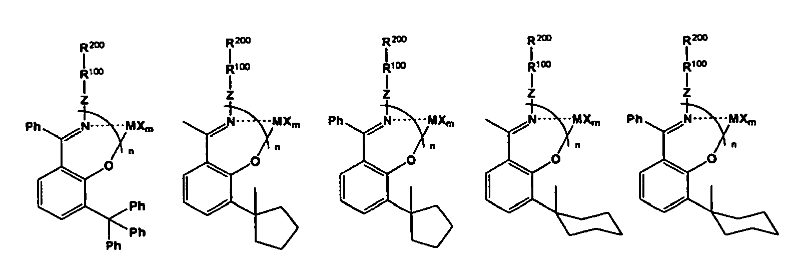 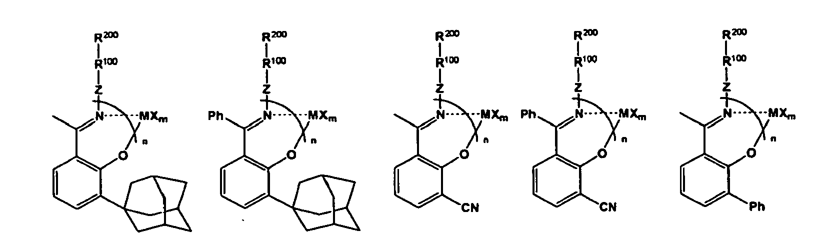 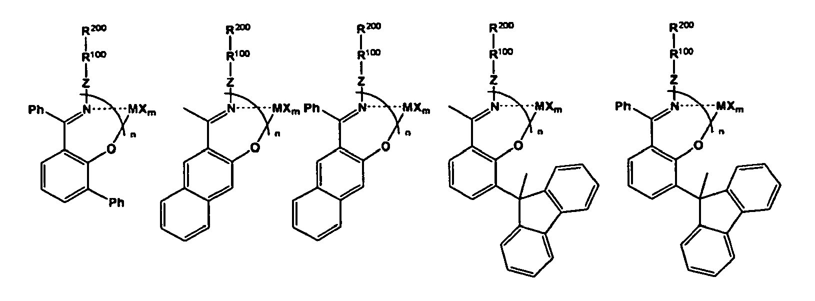 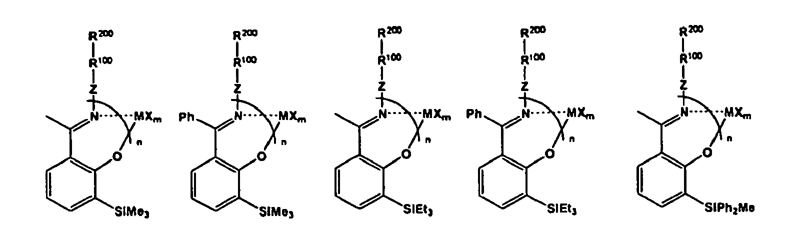 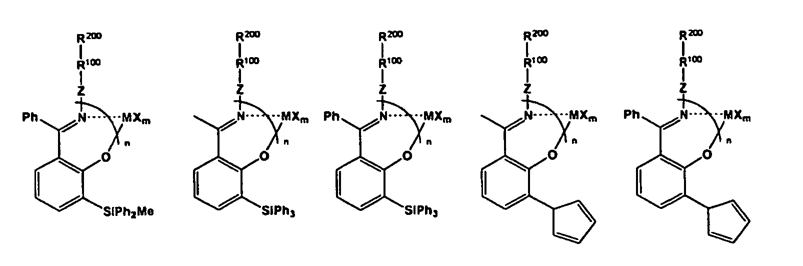 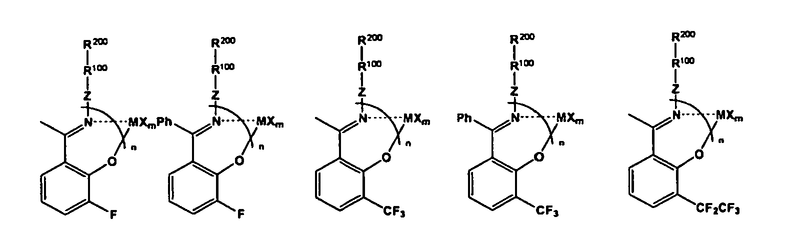 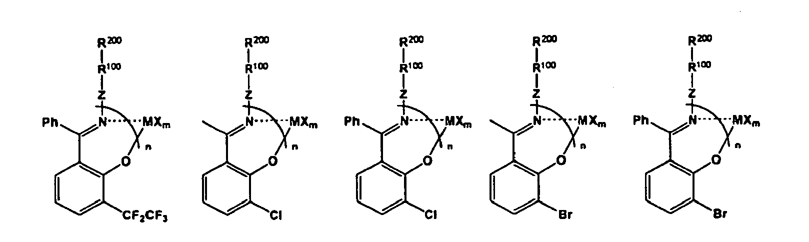 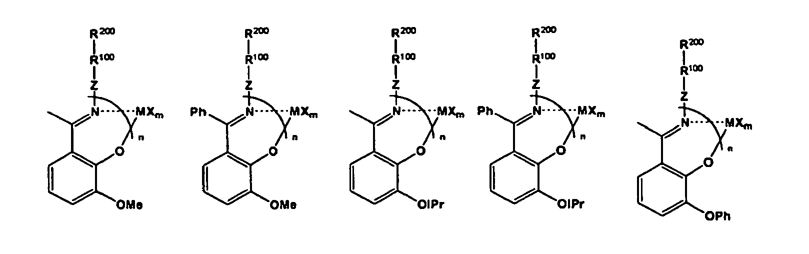 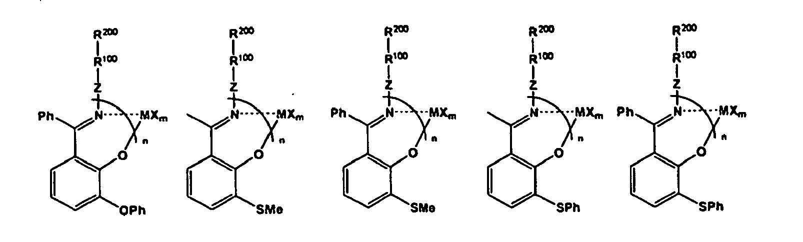 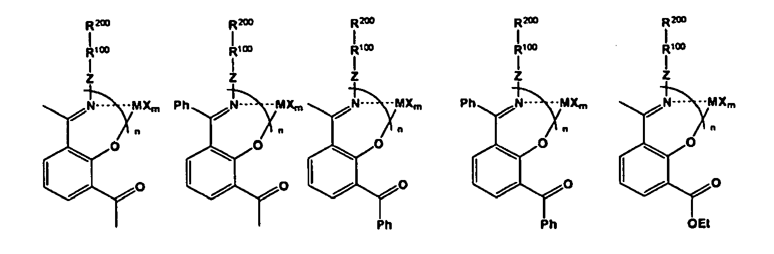 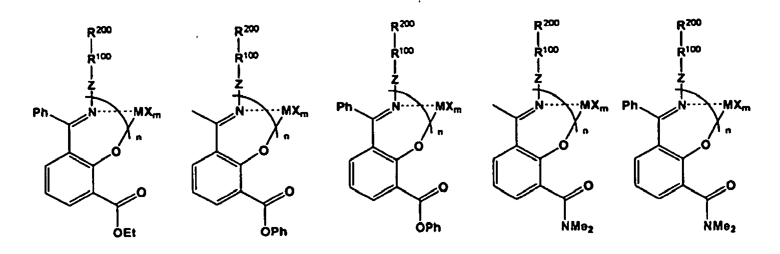 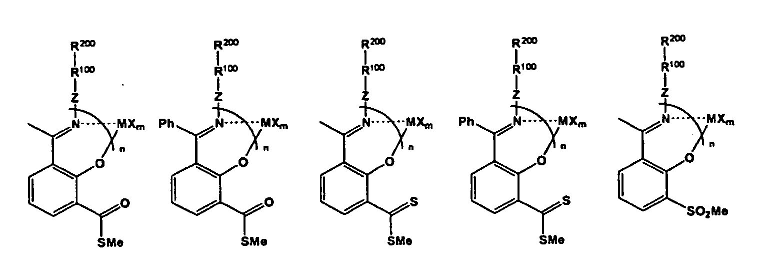 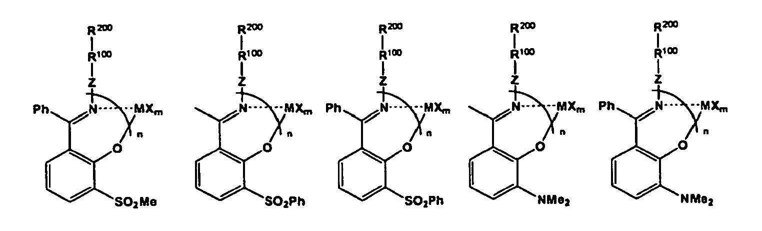 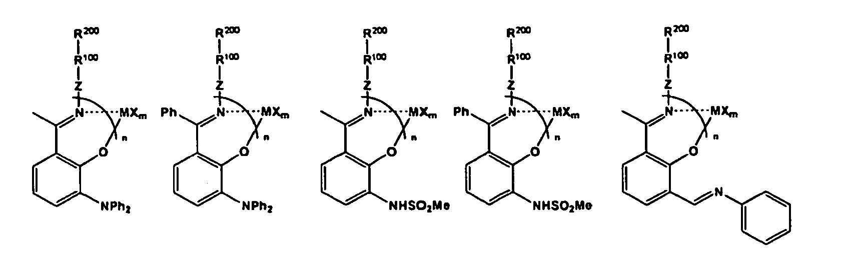 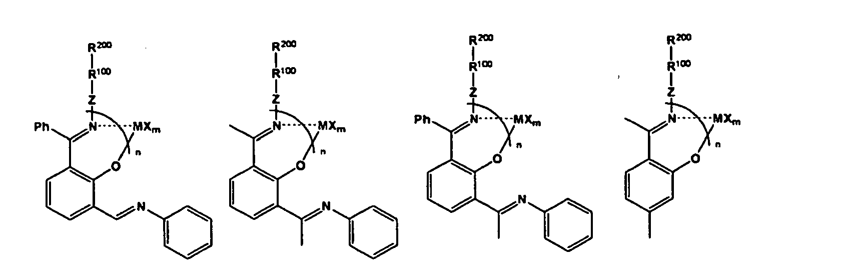 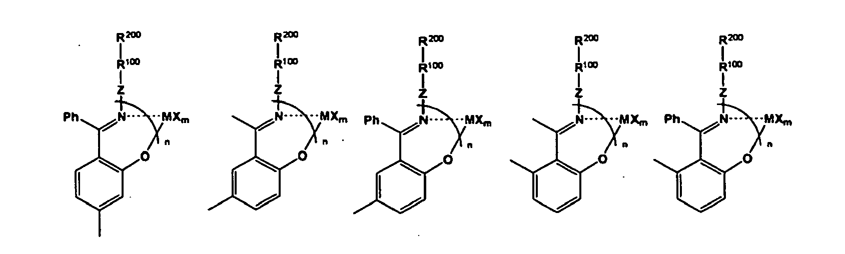 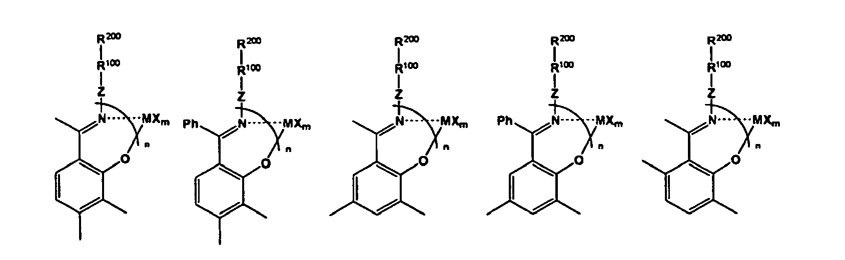 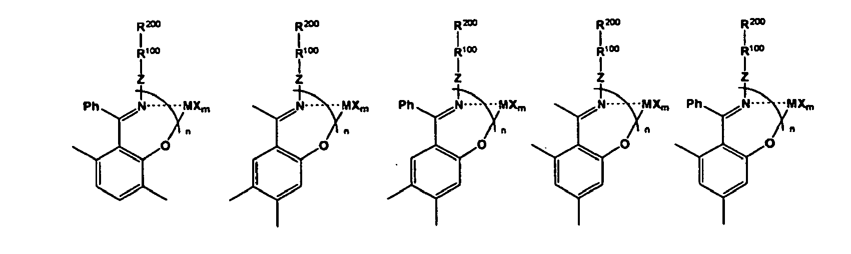 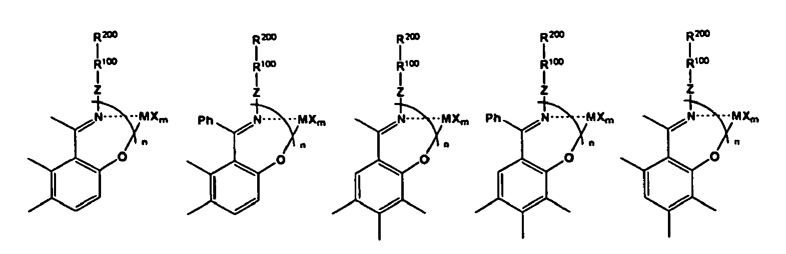 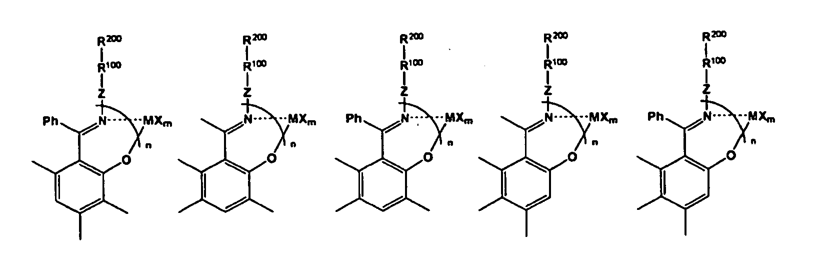 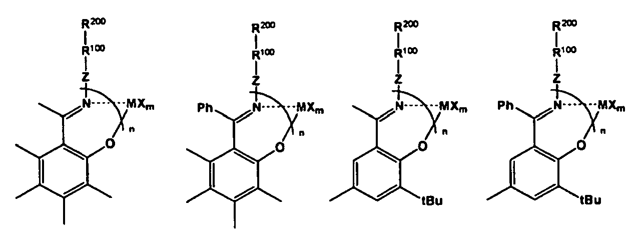 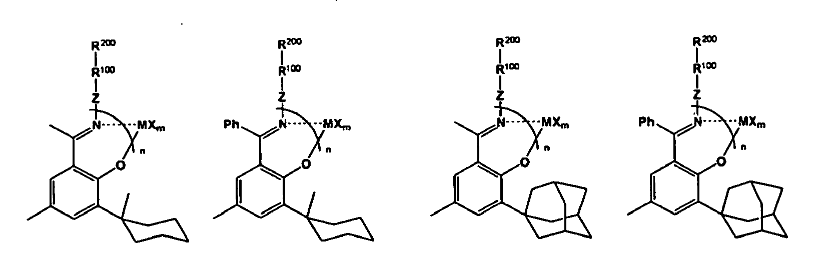 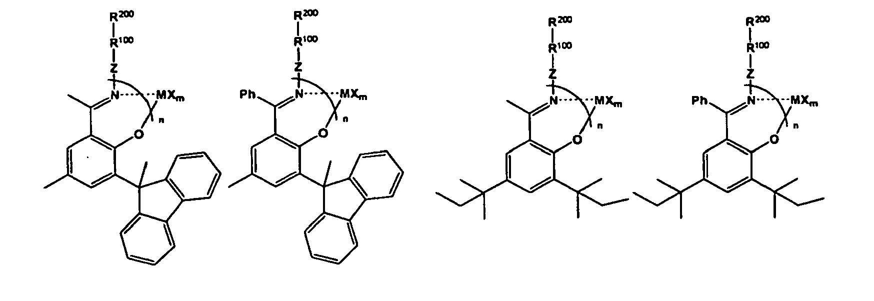 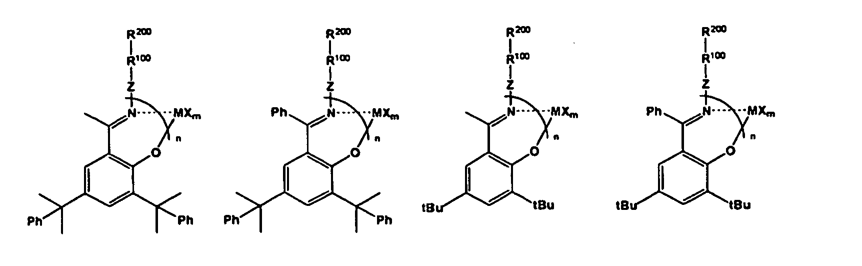 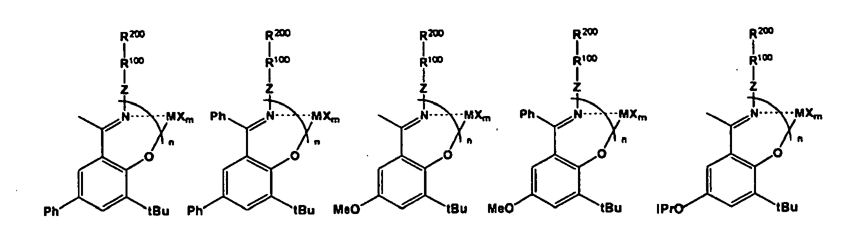 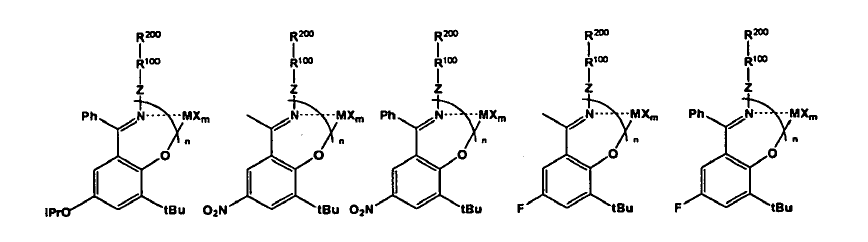 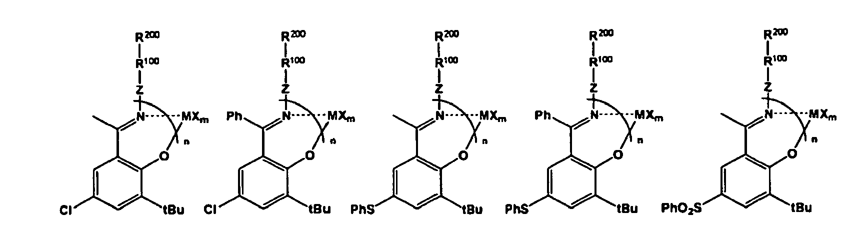 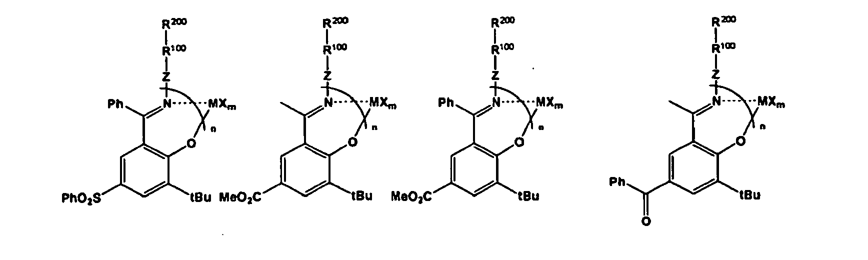 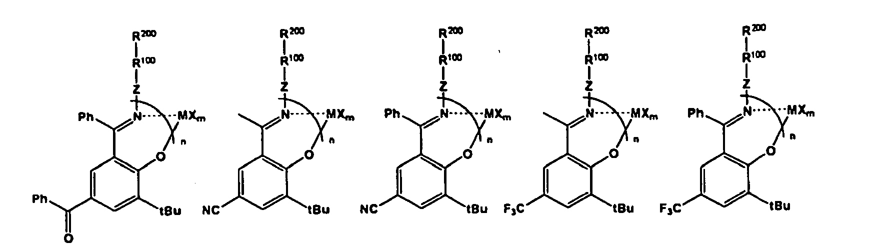 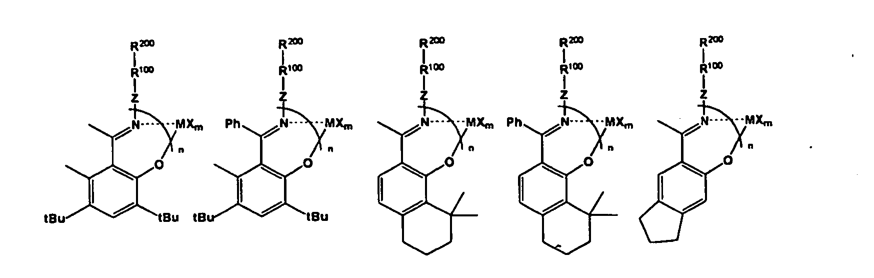 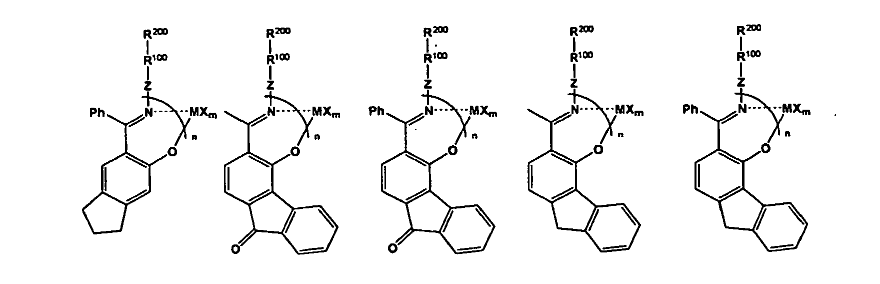 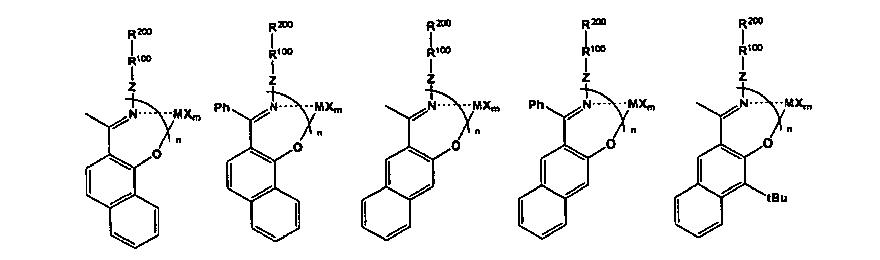 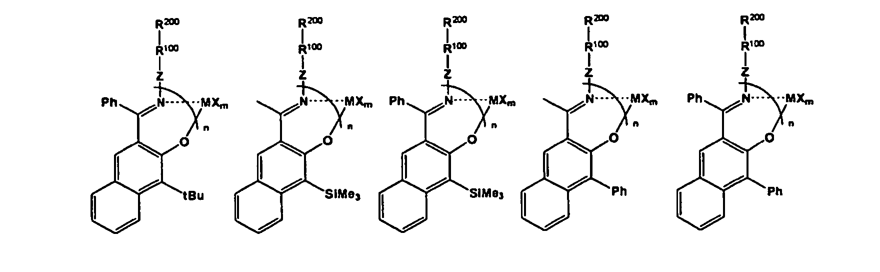 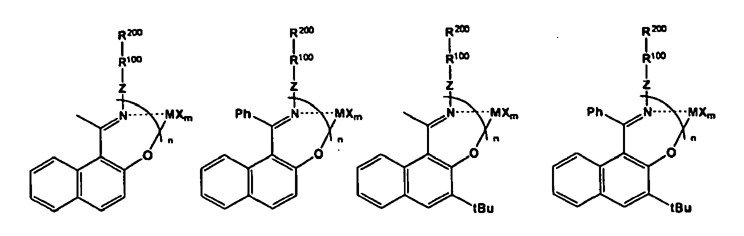 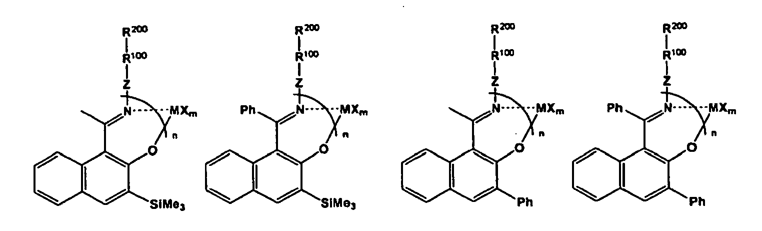 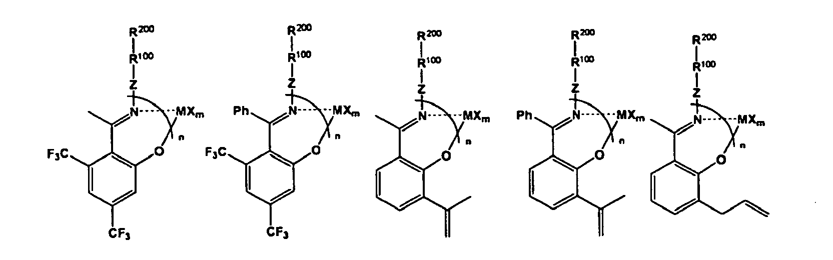 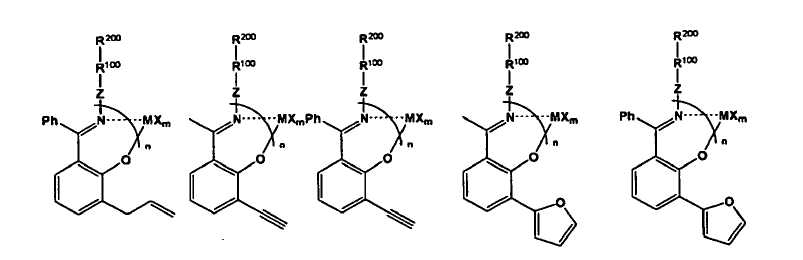 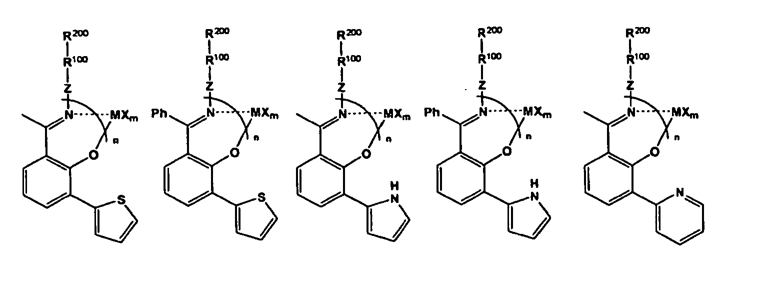 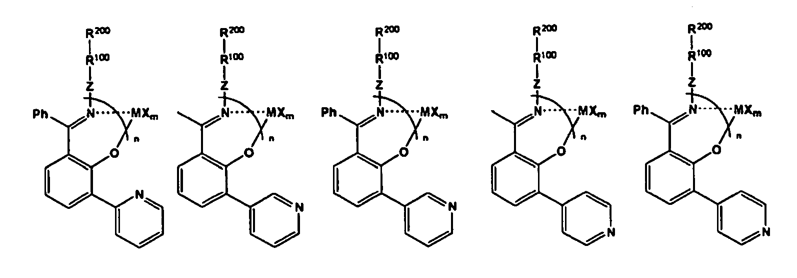 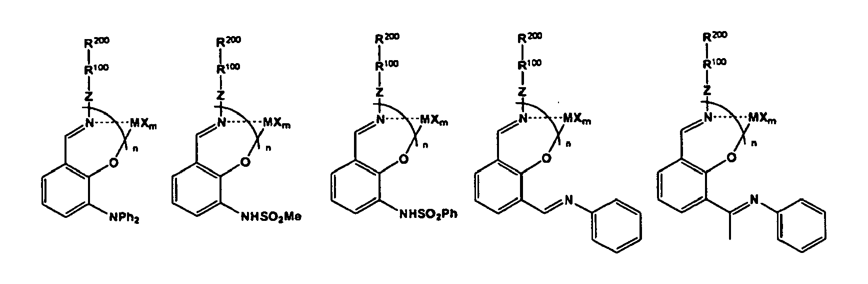 wobei bei den vorstehenden Verbindungen die Gruppe Z vollständig fehlt.

Des Weiteren sind Bestandteil dieser Erfindung Metallverbindungen, bei denen das Zirkoniumfragment "-zirkonium-dichlorid" die Bedeutungen
Zirkonium-monochloro-mono-(2,4-di-tert.-butyl-phenolat)
Zirkonium-monochloro-mono-(2,6-di-tert.-butyl-phenolat)
Zirkonium-monochloro-mono-(3,5-di-tert.-butyl-phenolat)
Zirkonium-monochloro-mono-(2,6-di-sec.-butyl-phenolat)
Zirkonium-monochloro-mono-(2,4-di-methylphenolat)
Zirkonium-monochloro-mono-(2,3-di-methylphenolat)
Zirkonium-monochloro-mono-(2,5-di-methylphenolat)
Zirkonium-monochloro-mono-(2,6-di-methylphenolat)
Zirkonium-monochloro-mono-(3,4-di-methylphenolat)
Zirkonium-monochloro-mono-(3,5-di-methylphenolat)
Zirkonium-monochloro-monophenolat
Zirkonium-monochloro-mono-(2-methylphenolat)
Zirkonium-monochloro-mono-(3-methylphenolat)
Zirkonium-monochloro-mono-(4-methylphenolat)
Zirkonium-monochloro-mono-(2-ethylphenolat)
Zirkonium-monochloro-mono-(3-ethylphenolat)
Zirkonium-monochloro-mono-(4-ethylphenolat)
Zirkonium-monochloro-mono-(2-sec.-butylphenolat)
Zirkonium-monochloro-mono-(2-tert.-butylphenolat)
Zirkonium-monochloro-mono-(3-tert.-butylphenolat)
Zirkonium-monochloro-mono-(4-sec.-butylphenolat)
Zirkonium-monochloro-mono-(4-tert.-butylphenolat)
Zirkonium-monochloro-mono-(2-isopropyl-5-methylphenolat)
Zirkonium-monochloro-mono-(4-isopropyl-3-methylphenolat)
Zirkonium-monochloro-mono-(5-isopropyl-2-methylphenolat)
Zirkonium-monochloro-mono-(5-isopropyl-3-methylphenolat)
Zirkonium-monochloro-mono-(2,4-bis-(2-methyl-2-butyl)-phenolat)
Zirkonium-monochloro-mono-(2,6-di-tert.-butyl-4-methyl-phenolat)
Zirkonium-monochloro-mono-(4-nonylphenolat)
Zirkonium-monochloro-mono-(1-naphtholat)
Zirkonium-monochloro-mono-(2-naphtholat)
Zirkonium-monochloro-mono-(2-phenylphenolat)
Zirkonium-monochloro-mono-(tert. butoxid)
Zirkonium-monochloro-mono-(N-methylanilid)
Zirkonium-monochloro-mono-(2-tert.-butylanilid)
Zirkonium-monochloro-mono-(tert.-butylamid)
Zirkonium-monochloro-mono-(di-iso.-propylamid)
Zirkonium-monochloro-mono-methyl
Zirkonium-monochloro-mono-benzyl

Die vorliegende Erfindung betrifft außerdem ein Verfahren zur Herstellung der erfindungsgemäßen chemischen Verbindungen der Formel (I). Eine mögliche Reaktionssequenz wird im folgenden Bild gezeigt. 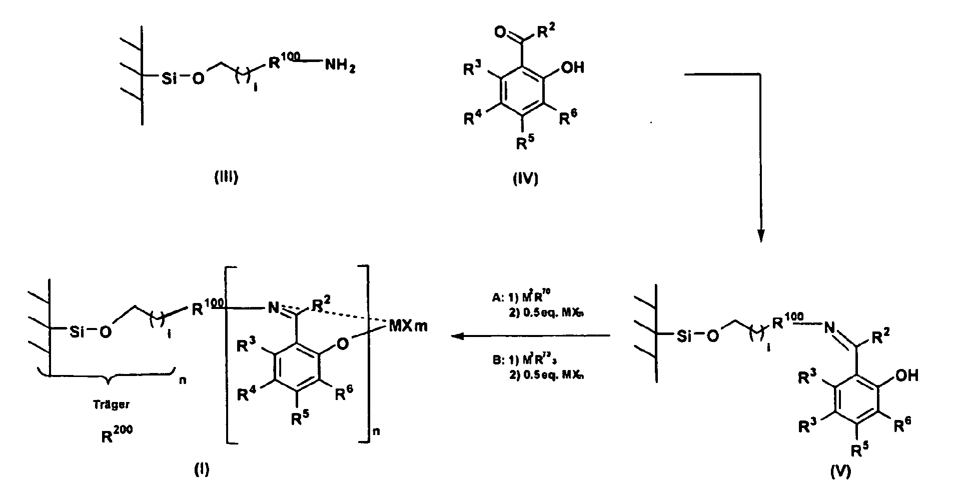 Hierin haben M, R², R³, R⁵, X, m, n, i, die oben stehende Bedeutung. Außerdem bedeuten:
- R⁷⁰: ein Wasserstoffatom oder eine C₁-C₂₀ - kohlenstoffhaltige Gruppe, und
- R⁷¹: ein Halogenatom, wie Chlor, Brom, Fluor oder Si(R¹⁰)₃, worin R¹⁰ gleich oder verschieden ein C₁-C₂₀-Alkyl, ein C₁-C₁₀-Fluoralkyl, ein C₁-C₁₀-Alkoxy, ein C₆-C₂₀-Aryl, ein C₆-C₁₀-Fluoraryl, ein C₆-C₁₀-Aryloxy, ein C₂-C₁₀-Alkenyl, ein C₇-C₄₀-Arylalkyl, ein C₇-C₄₀-Alkylaryl oder ein C₈-C₄₀-Arylalkenyl ist, bevorzugte Alkyloxygruppen sind MeO-, EtO- und ButO-Gruppen, und
- R⁷³: ein Wasserstoffatom oder eine lineare oder verzweigte C₁-C₁₂-Alkylgruppe, bevorzugt Methyl, Ethyl, n-Butyl, n-Hexyl, Isoproppyl, Isobutyl, Isopentyl, Cyclohexyl, Cyclopentyl oder Octyl ist, besonders bevorzugt ist Methyl, Ethyl, Isopropyl oder Cyclohexyl oder ein Halogenatom oder ein C₅-C₁₈-Heteroaryl, ein C₇-C₁₂-Arylalkyl, ein C₇-C₁₂-Alkylaryl, ein fluorhaltiges C₁-C₈-Alkyl, ein fluorhaltiges C₆-C₁₈-Aryl, ein fluorhaltiges C₇-C₁₂-Arylalkyl oder ein fluorhaltiges C₇-C₁₂-Alkylaryl ist, und
- M²: ein Element der I. und II. Gruppe des Periodensystems der Elemente, bevorzugt Lithium, Natrium, Kalium und Magnesium, ganz besonders bevorzugt Lithium und Natrium
- M³: ein Element der 13., 14., 15. oder 16.-Gruppe des Periodensystems der Elemente ist, bevorzugt, Stickstoff, Phosphor, ganz besonders bevorzugt Stickstoff ist.

Hierzu wird eine oder mehrere Verbindungen der Formel (III) die in einem Lösemittel suspendiert sein aber auch in Substanz vorliegen kann, mit einer oder mehren Verbindungen der Formel (IV), die ebenfalls in einem Lösemittel gelöst oder suspendiert sein aber auch in Substanz vorliegen können, umgesetzt. Als Lösemittel dienen aliphatische oder aromatische Kohlenwasserstoffe wie n-Pentan, Isopentan, n-Hexan, n-Heptan, Cyclohexan, Isododekan, n-Octan, n-Nonan, n-Decan, Petrolether, Toluol, Benzol, o-Xylol, m-Xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. sowie Ether, wie Diethylether, Methyl-tert-butylether, Dimethoxyethan, Diisopropylether, Di-n-butylether, Anisol, Methanol, Ethanol, Isopropanol und Butanol oder Mischungen von diesen. Die Zugabe kann über einen Zeitraum von 1 Minute bis zu 96 Stunden erfolgen. Bevorzugt ist eine Zugabe innerhalb von 100 Minuten bis zu 36 Stunden. Die Temperatur der Vorlage liegt bei der Zugabe zwischen -100°C und 200°C. Bevorzugt sind Temperaturen zwischen -80°C und 150°C. Besonders bevorzugt sind Temperaturen zwischen 20°C und 150°C. Die Temperatur wird so gewählt, daß zumindest ein Reaktionspartner in flüssiger Phase vorliegen. Die anschließende Reaktionstemperatur liegt in einem bevorzugten Temperaturbereich zwischen 20 °C und 150°C. Desweiteren kann die Umsetzung bei Normaldruck durchgeführt, sie kann jedoch auch bei erhöhtem Druck durchgeführt werden, was jedoch entsprechende Reaktoren voraussetzt. Das stöchiometrische Verhältnis in dem Verbindungen der Formel (III) und (IV) zusammengegeben werden, liegt zwischen 1 : 1000 und 1 : 0.01, bezogen auf eingesetzte Menge der Verbindungen der Formel (III). Bevorzugt ist ein stöchiometrisches Verhältnis zwischen Verbindungen der Formel (III) und (IV) zu eingesetzter Menge gemäß Formel (III), zwischen 1 :100 und 1 : 0.1. Besonders bevorzugt ist eine nahezu stöchiometrische Umsetzung bezogen auf die Verbindungen der Formel (III) und (IV). Es resultiert eine Verbindung der Formel (V).

Erläuternde, jedoch nicht einschränkende Beispiele für die erfindungsgemäßen Verbindungen der Formel (IV) sind: 3,5 -Di-tert-butyl -2-hydroxybenzaldehyd, 1-[3, 5-Di(tert-butyl)-2-hydroxyphenyl] ethan1-on, 2-Hydroxybenzophenon, 2-Hydroxybenzaldehyd, 1-[-2-Hydroxyphenyl] ethan-1-on, 3,5-Diisopropyl-2-hydroxybenzaldehyd, 3,5- Ditrimethylsilyl-2-hydroxybenzaldehyd, 3,5-Dimethyl-2-hydroxybenzaldehyd, 3,5-Diethyl-2-hydroxybenzaldehyd, 3,5- Di-n-propyl-2-hydroxybenzaldehyd, 3,5-Di-n-butyl-2-hydroxybenzaldehyd, 3,5-Di-phenyl-2-hydroxybenzaldehyd, 3,5-Ditolyl-2-hydroxybenzaldehyd, 3,5-Di-naphtyl 2-Hydroxybenzaldehyd, 3,5-Diadamanthyl-2-hydroxybenzaldehyd, 3,5-Dinorbornyl-2-hydroxybenzaldehyd, 3,5-Di-fluoro 2-hydroxybenzaldehyd, 3,5 Di-Chloro 2-hydroxybenzaldehyd, 4,6-Diisopropyl-2-hydroxybenzaldehyd, 4,6-Ditrimethylsilyl-2-hydroxybenzaldehyd, 4,6-Dimethyl-2-hydroxybenzaldehyd, 4,6-Diethyl-2-hydroxybenzaldehyd, 4,6-Di n-propyl-2-hydroxybenzaldehyd, 4,6-Di-n-butyl-2-hydroxybenzaldehyd, 4,6-Di-phenyl-2-hydroxybenzaldehyd, 4,6-Ditolyl-2-hydroxybenzaldehyd, 4,6-Di-naphtyl-2-hydroxybenzaldehyd, 4,6-Diadamanthyl-2-hydroxybenzaldehyd, 4,6-Dinorbornyl 2-hydroxybenzaldehyd, 4,6-Di-fluoro-2-hydroxybenzaldehyd, 4,6-Di-Chloro-2-hydroxybenzaldehyd, 3,6-Diisopropyl-2-hydroxybenzaldehyd, 3,6-Ditrimethylsilyl-2-hydroxybenzaldehyd, 3,6-Dimethyl-2-hydroxybenzaldehyd, 3,6-Diethyl-2-hydroxybenzaldehyd, 3,6-Di n-propyl-2-hydroxybenzaldehyd, 3,6-Di-n-butyl 2-hydroxybenzaldehyd, 3,6-Di-phenyl-2-hydroxybenzaldehyd, 3,6-Ditolyl-2-hydroxybenzaldehyd, 3,6-Di-naphtyl-2-hydroxybenzaldehyd, 3,6-Diadamanthyl-2-hydroxybenzaldehyd, 3,6-Dinorbornyl-2-hydroxybenzaldehyd, 3,6-Di-fluoro-2-hydroxybenzaldehyd, 3,6-Di-Chloro-2-hydroxybenzaldehyd, 4-isopropyl-2-hydroxybenzaldehyd, 4-trimethylsilyl-2-hydroxybenzaldehyd, 4-methyl-2-hydroxybenzaldehyd, 4-ethyl-2-hydroxybenzaldehyd, 4-n-propyl-2-hydroxybenzaldehyd, 4 -n-butyl-2-hydroxybenzaldehyd, 4 -phenyl 2-hydroxybenzaldehyd, 4-tolyl-2-hydroxybenzaldehyd, 4-naphtyl 2-hydroxybenzaldehyd, 4-adamanthyl-2-hydroxybenzaldehyd, 4-norbornyl-2-hydroxybenzaldehyd, 4-fluoro-2-hydroxybenzaldehyd, 4-Chloro-2-hydroxybenzaldehyd, 4-isopropyl-2-hydroxybenzaldehyd, 3-trimethylsilyl-2-hydroxybenzaldehyd, 3-methyl-2-hydroxybenzaldehyd, 3-ethyl-2-hydroxybenzaldehyd, 3-n-propyl-2-hydroxybenzaldehyd, 3-n-butyl-2-hydroxybenzaldehyd, 3-phenyl-2-hydroxybenzaldehyd, 3-tolyl-2-hydroxybenzaldehyd, 3-naphtyl-2-hydroxybenzaldehyd, 3-adamanthyl-2-hydroxybenzaldehyd, 3-norbornyl-2-hydroxybenzaldehyd, 3-fluoro-2-hydroxybenzaldehyd, 3-Chloro-2-hydroxybenzaldehyd, 5-isopropyl- 2-hydroxybenzaldehyd, 5-trimethylsilyl-2-hydroxybenzaldehyd, 5-methyl-2-hydroxybenzaldehyd, 5-ethyl-2-hydroxybenzaldehyd, 5- n-propyl-2-hydroxybenzaldehyd, 5 -n-butyl-2-hydroxybenzaldehyd, 5 -phenyl-2-hydroxybenzaldehyd, 5-tolyl-2-hydroxybenzaldehyd, 5-naphtyl-2-hydroxybenzaldehyd, 5-adamanthyl-2-hydroxybenzaldehyd, 5-norbornyl 2-hydroxybenzaldehyd, 5- fluoro-2-hydroxybenzaldehyd,5-Chloro 2-hydroxybenzaldehyd, 4-isopropyl-2-hydroxybenzaldehyd, 6-trimethylsilyl-2-hydroxybenzaldehyd, 6-methyl-2-hydroxybenzaldehyd, 6-ethyl-2-hydroxybenzaldehyd, 6- n-propyl-2-hydroxybenzaldehyd, 6 -n-butyl-2-hydroxybenzaldehyd, 6 -phenyl-2-hydroxybenzaldehyd, 6-tolyl-2-hydroxybenzaldehyd, 6-naphtyl-2-hydroxybenzaldehyd, 6-adamanthyl-2-hydroxybenzaldehyd, 6-norbornyl-2-hydroxybenzaldehyd, 6- fluoro-2-hydroxybenzaldehyd, 6-Chloro-2-hydroxybenzaldehyd, 3, 4, 5, 6- tetrafluoro-2-hydroxybenzaldehyd, 3, 4, 5, 6- tetrachloro-2-hydroxybenzaldehyd, 3, 5, 6- trifluoro 2-hydroxybenzaldehyd, 3, 5, 6- trichloro-2-hydroxybenzaldehyd, 1-[3, 5-Di(tert-butyl)-2-Hydoxyphenyl] propan1-on, 1-[3, 5-Di(tert-butyl)-2-Hydoxyphenyl] pentan1-on, 1-[3, 5-Di(tert-butyl)-2-Hydoxyphenyl] hexan1-on, 1-(2-Hydoxyphenyl)- propan1-on, 1-(2-Hydoxyphenyl) pentan1-on, 1-(-2-Hydoxyphenyl) hexan1-on, 1[-3, 5-Di(tert-butyl)-2-Hydoxyphenyl}]pyridino-1-on,

Im nächsten Schritt können eine oder mehrere Verbindung der Formel (V) in einem Reaktionsgefäß vorgelegt werden. Die Verbindungen können in einem Lösemittel suspendiert sein oder aber auch in Substanz vorliegen. Als Lösemittel dienen aliphatische oder aromatische Kohlenwasserstoffe wie n-Pentan, Isopentan, n-Hexan, n-Heptan, Cyclohexan, Isododekan, n-Octan, n-Nonan, n-Decan, Petrolether, Toluol, Benzol, o-Xylol, m-Xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. sowie Ether, wie Diethylether, Methyl-tert-butylether, Dimethoxyethan, Diisopropylether, Di-n-butylether, Anisol , Methanol, Ethanol, Isopropanol und Butanol oder Mischungen von diesen. Die Vorlage erfolgt bei Temperaturen zwischen -100°C und 300°C, bevorzugt zwischen -80°C und 200°C, insbesondere bevorzugt bei Temperaturen zwischen 20°C und 150°C.

Anschließend kann die Zugabe nach der Route A oder B verlaufen. Diese Routen unterscheiden sich nur durch die verwendeten Deprotonierungsreagenzien.
Für die Route A werden Metallorganylverbindungen verwendet, nicht einschränkende Beispiele sind: n-Butyllithium, sec-Butyllithium, tert.-Butyllithium, Methyllithium.
Für die Route B werden stickstoffhaltige Basen verwendet, nicht einschränkende Beispiele sind: Triethylamin, Triisopropylamin, N, N-Dimethyisopropylamin, N,N-Dimethylethyl-amin, N, N-Dimethylcyclohexylamin, N, N-Diethylcyclohexylamin, N, N-Dimethyl-isopropylamin, N, N-Diethylbenzylamin, N, N-Dimethyl-p-toluidinamin, N, N-Diethyl-p-toluidinamin N, N-Dimethylbenzylamin, N, N-Diethylisopropylamin, N, N-Diisopropylmethylamin, N, N-Diisopropylethylamin, N, N- Dimethylcyclopentylamin, N, N-Dimethylcycloheptenylamin, N, N-Dimethylcyclooctanylamin, N, N-Dimethylnonanoylamin, N, N- Diethylcyclopentylamin, N, N-Diethylcycloheptenylamin, N, N-Diethylcyclooctanylamin, N, N-Diethylnonanoylamin

Die Umsetzung einer oder mehrerer Verbindungen der Formel (V) kann nach Route A oder B erfolgen. Diese können Verbindungen der Formel (V) ebenfalls in einem Lösemittel suspendiert sein aber auch in Substanz vorliegen. Als Lösemittel dienen die bereits oben beschriebenen, vorzugsweise wird das gleiche Lösemittel verwendet. Die Zugabe kann über einen Zeitraum von 1 Minute bis zu 96 Stunden erfolgen. Bevorzugt ist eine Zugabe innerhalb von 10 Minuten bis zu 16 Stunden. Die Temperatur der Vorlage liegt bei der Zugabe zwischen -100°C und 200°C. Bevorzugt sind Temperaturen zwischen -80°C und 150°C. Besonders bevorzugt sind Temperaturen zwischen 20°C und 150°C. Die Temperatur wird so gewählt, daß zumindest ein Reaktionspartner in flüssiger Phase vorliegt. Die anschließende Reaktionstemperatur liegt in einem bevorzugten Temperaturbereich zwischen 20 °C und 150°C. Desweiteren kann die Umsetzung bei Normaldruck durchgeführt, sie kann jedoch auch bei erhöhtem Druck durchgeführt werden, was jedoch entsprechende Reaktoren voraussetzt. Das stöchiometrische Verhältnis entsprechen den oben beschriebenen. Aus dieser Reaktion entstehen die erfindungsgemäßen Verbindungen Formel (I).

Die vorliegende Erfindung betrifft außerdem ein Katalysatorsystem welches die erfindungsgemäße chemische Verbindung der Formel (I) enthält.

Die erfindungsgemäßen Metallkomplexe der Formel (I) eignen sich insbesondere als Bestandteil von Katalysatorsystemen zur Herstellung von Polyolefinen durch Polymerisation von mindestens einem Olefin in Gegenwart eines Katalysators, der mindestens einen Cokatalysator und mindestens ein Metallkomplex enthält.

Der Cokatalysator, der zusammen mit einem erfindungsgemäßen Übergangsmetallkomplex der Formel (I) das Katalysatorsystem bildet, enthält mindestens eine Verbindung vom Typ eines Aluminoxans oder einer Lewis-Säure oder einer ionischen Verbindung, die durch Reaktion mit einer metallorganischen Verbindung dieses in eine kationische Verbindung überführt.

Als Aluminoxan wird bevorzugt eine Verbindung der allgemeinen Formel (XII)

(R AlO)ₙ (XII)

verwendet.

Weitere geeignete Aluminoxane können z.B. cyclisch wie in Formel (XIII) 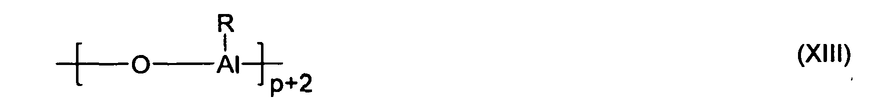 oder linear wie in Formel (XIV) 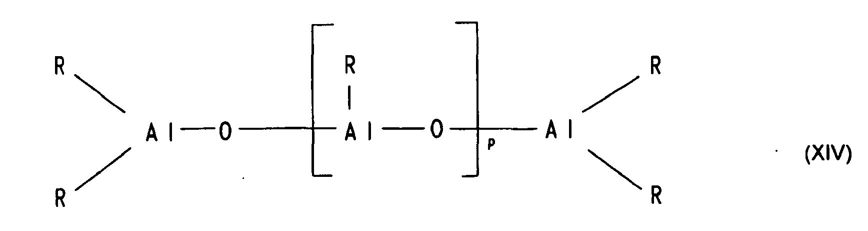 oder vom Cluster-Typ wie in Formel (XV) 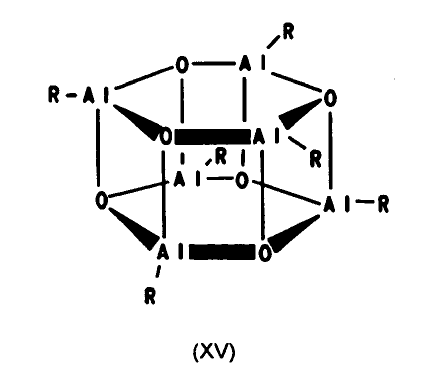 sein. Derartige Aluminoxane werden beispielsweise in JACS 117 (1995), 6465-74, Organometallics 13 (1994), 2957-2969, beschrieben.

Die Reste R in den Formeln (XII), (XIII), (XIV) und (XV) können gleich oder verschieden sein und eine C₁-C₂₀-Kohlenwasserstoffgruppe wie eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeuten.
Bevorzugt sind die Reste R gleich und bedeuten Methyl, Isobutyl, n-Butyl, Phenyl oder Benzyl, besonders bevorzugt Methyl.
Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z. B. Toluol) umgesetzt wird.
Zur Herstellung eines Aluminoxans mit verschiedenen Alkylgruppen R werden entsprechend der gewünschten Zusammensetzung und Reaktivität zwei verschiedene Aluminiumtrialkyle (AlR₃ + AlR'₃) mit Wasser umgesetzt (vgl. S. Pasynkiewicz, Polyhedron 9 (1990) 429 und EP-A-0,302,424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die C₁-C₂₀-kohlenstoffhaltige Gruppen enthalten, wie verzweigte oder unverzweigte Alkyl- oder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trimethylaluminium, Triethylaluminium, Triisobutylaluminium, Tributylaluminium, Trifluoroboran, Triphenylboran,
Tris(4-fluorophenyl)boran, Tris(3,5-difluorophenyl)boran,
Tris(4-fluoromethylphenyl)boran, Tris(pentafluorophenyl)boran, Tris(tolyl)boran,
Tris(3,5-dimethylphenyl)boran, Tris(3,5-difluorophenyl)boran und/oder
Tris(3,4,5-trifluorophenyl)boran. Insbesondere bevorzugt ist Tris(pentafluorophenyl)boran.
Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, SbF₆⁻, CF₃SO₃⁻ oder ClO₄⁻.
Als kationische Gegenionen werden protonierte Lewis-Basen wie z.B. Methylamin, Anilin, N, N-Dimethylbenzylamin sowie Derivate, N, N-Dimethylcyclohexylamin sowie Derivate, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen oder Triphenylcarbenium eingesetzt.

Beispiele für solche ionischen Verbindungen sind
Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N, N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.
Bevorzugt sind Triphenylcarbeniumtetrakis(pentafluorophenyl)borat und/oder
N,N-Dimethylaniliniumtetrakis(pentafluorophenyl)borat.
N,N-Dimethylbenzylammoniumtetrakis(pentafluorophenyl)borat.
N,N-Dimethylcyclohexylammoniumtetrakis(pentafluorophenyl)borat.
Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie z. B.
7,8-Dicarbaundecaboran(13),
Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl)ammonium)nonaborat,
Bis(tri(butyl)ammonium)undecaborat,
Bis(tri(butyl)ammonium)dodecaborat,
Bis(tri(butyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(butyl)ammoniumbis(nonahydrid-1,3-dicarbonnonaborat)cobaltate(III),
Tri(butyl)ammoniumbis(undecahydrid-7,8-dicarbaundecaborat)ferrat(III) von Bedeutung.

Als Cokatalysatorsysteme sind ebenfalls Kombinationen aus mindestens einem der oben genannten Amine und einem Träger mit elementorganischen Verbindungen wie sie im Patent WO 99/40129 beschrieben sind, von Bedeutung.

Bevorzugter Bestandteil dieser Cokatalysatorsysteme sind die Verbindungen der Formeln (A) und (B), 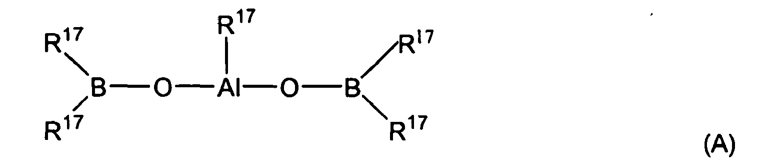 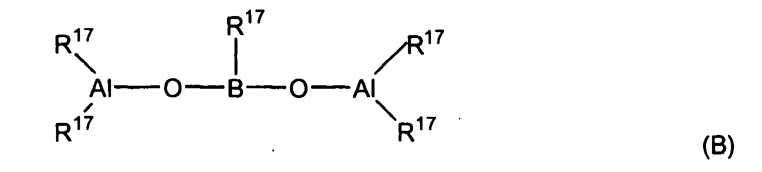 worin
- R¹⁷: ein Wasserstoffatom, ein Halogenatom, eine C₁-C₄₀-kohlenstoffhaltige Gruppe, insbesondere C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl oder C₇-C₄₀-Halogenalkylaryl. R¹⁷ kann auch eine -OsiR¹⁸₃-Gruppe sein, worin R¹⁸ gleich oder verschieden sind und die gleiche Bedeutung wie R¹⁷ haben.

Als weiterer bevorzugter Cokatalysator sind darüber hinaus allgemein Verbindungen anzusehen, die durch die Umsetzung mindestens einer Verbindung der Formel (C) und/oder (D) und/oder (E) mit mindestens einer Verbindung der Formel (F) entstehen.

R¹⁷vB-(DR⁸⁰)ₛ (C)

R¹⁷₂B-X¹-BR¹⁷₂ (D)

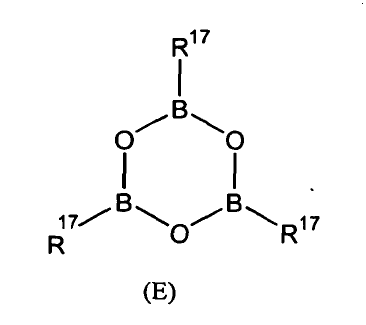

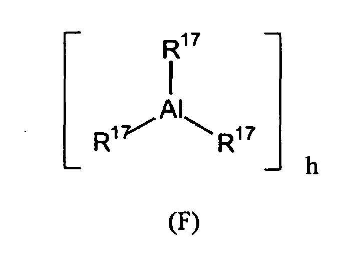

worin
- R⁸⁰: ein Wasserstoffatom oder eine borfreie C₁-C₄₀-kohlenstoffhaltige Gruppe wie C₁-C₂₀-Alkyl, C₆-C₂₀-Aryl, C₇-C₄₀-Arylalky, C₇-C₄₀-Alkylaryl sein kann und worin
- R¹⁷: die gleiche Bedeutung wie vorstehend genannte hat,
- X¹: ist gleich ein Element der VI. Hauptgruppe des Periodensystems der Elemente oder eine NR-Gruppe, worin R ein Wasserstoffatom oder eine C₁-C₂₀-Kohlenwasserstoffrest wie C₁-C₂₀-Alkyl oder C₁-C₂₀-Aryl ist,
- D: ist gleich ein Element der VI. Hauptgruppe des Periodensystems der Elemente oder eine NR-Gruppe, worin R ein Wasserstoffatom oder eine C₁-C₂₀-Kohlenwasserstoffrest wie C₁-C₂₀-Alkyl oder C₁-C₂₀-Aryl ist,
- v: eine ganze Zahl von 0 bis 3 ist
- s: eine ganze Zahl von 0 bis 3 ist,
- h: eine ganze Zahl von 1 bis 10 ist,
- B: Bor ist,
- Al: Aluminium ist.

Gegebenenfalls werden die elementorganischen Verbindungen mit einer Organometallverbindung der Formel XII bis XV und oder XVI [M⁴⁰R¹⁹_{b}]_{d} kombiniert,
worin M⁴⁰ ein Element der I., II. und III. Hauptgruppe des Periodensystems der Elemente ist, R¹⁹ gleich oder verschieden ist und ein Wasserstoffatom, ein Halogenatom, eine C₁-C₄₀-kohlenstoffhaltige Gruppe, insbesondere C₁-C₂₀- Alkyl-, C₆-C₄₀-Aryl-, C₇-C₄₀-Aryl-alkyl oder C₇-C₄₀-Alkyl-aryl-Gruppe bedeutet, b eine ganze Zahl von 1 bis 3 und d ist eine ganze Zahl von 1 bis 4 ist.

Beispiele für die cokatalytisch wirkenden Verbindungen der Formeln A und B sind

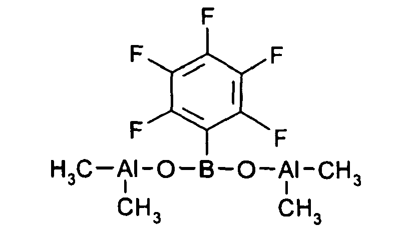

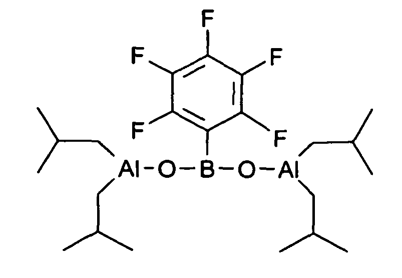

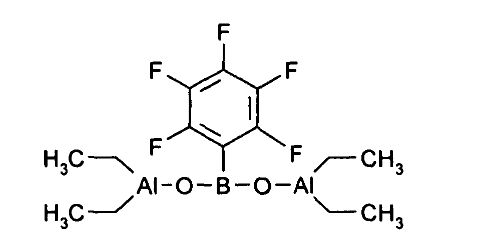

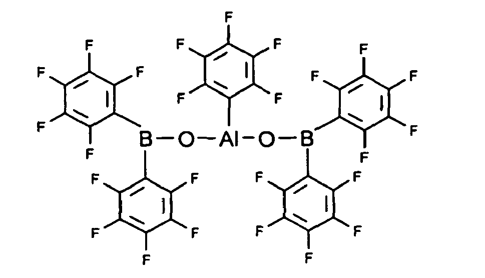

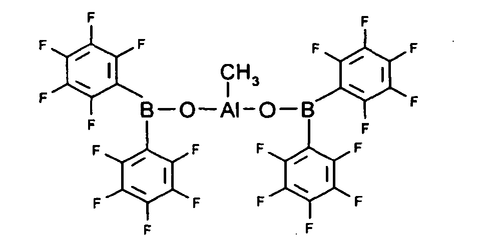

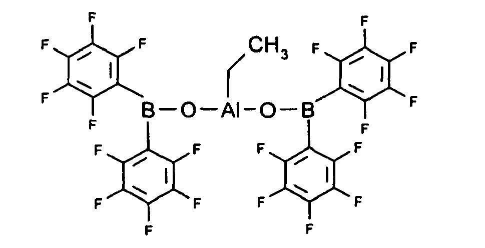

Bei den Organometallverbindungen der Formel XVI handelt es sich vorzugsweise um neutrale Lewissäuren worin M⁴⁰ für Lithium, Magnesium und/oder Aluminium, insbesondere Aluminium, steht. Beispiele für die bevorzugten Organometall-Verbindungen der Formel XII sind Trimethylaluminium, Triethylaluminium, Triisopropylaluminium, Trihexylaluminium, Trioctylaluminium, Tri-n-butylaluminium, Tri-n-propylaluminium, Triisoprenaluminium, Dimethylaluminiummonochlorid, Diethylaluminiummonochlorid, Diisobutylaluminiummonochlorid, Methylaluminiumsesquichlorid, Ethylaluminiumsesquichlorid, Dimethylaluminiumhydrid, Diethylaluminiumhydrid, Diisopropylaluminiumhydrid, Dimethylaluminium(trimethylsiloxid), Dimethylauminium(triethylsiloxid), Phenylalan, Pentafluorphenylalan und o-Tolylalan.

Als weitere Cokatalysatoren, die ungeträgert oder geträgert vorliegen können, sind die in EP-A-924223, DE-A-19622207, EP-A-601830, EP-A-824112, EP-A-824113, EP-A-811627, WO97/11775 und DE-A-19606167 genannten Verbindungen zu verwenden.

Die Trägerkomponente der Aminophase des erfindungsgemäßen Katalysatorsystems kann ein beliebiger organischer oder anorganischer, inerter Feststoff sein, insbesondere ein poröser Träger wie Talk, anorganische Oxide und feinteilige Polymerpulver (z.B. hochporöse Polyolefine wie Polyethylen und Polypropylen sowie Polystyrole, die in ihrer Partikelgröße und ihrem Porenvolumen ähnlich denen zum Silica sind).
Geeignete anorganische Oxide finden sich in der II-VI Hauptgruppe des Periodensystems und der III-IV Nebengruppe des Periodensystems der Elemente. Beispiele für als Träger bevorzugte Oxide umfassen Siliciumdioxid, Aluminiumoxid, sowie Mischoxide der Elemente Calcium, Aluminium, Silicium, Magnesium, Titan und entsprechende Oxid-Mischungen. Andere anorganische Oxide, die allein oder in Kombination mit den zuletzt genannten bevorzugten oxidischen Trägern eingesetzt werden können, sind z.B. MgO, ZrO₂, TiO₂ oder B₂O₃ ,um nur einige zu nennen.
Die verwendeten Trägermaterialien weisen eine spezifische Oberfläche im Bereich von 10 bis 1000 m²/g, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 µm , einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 µm.
Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.
Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium- , Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.
Zur Darstellung des geträgerten Katalysatorsystems wird mindestens eine der oben beschriebenen kovalent fixierten Übergangsmetallverbindungen der Formel (I) in einem geeigneten Lösemittel mit mindestens einer Cokatalysatorkomponente in Kontakt gebracht, wobei bevorzugt Addukt oder ein Gemisch erhalten wird.

Das Lösemittel wird anschließend entfernt und das resultierende geträgerte Übergangsmetallverbindung-Katalysatorsystem getrocknet, um sicherzustellen, daß das Lösemittel vollständig oder zum größten Teil aus den Poren des Trägermaterials entfernt wird. Der geträgerte Katalysator wird als frei fließendes Pulver erhalten. Ein Verfahren zur Darstellung eines frei fließenden und gegebenenfalls vorpolymerisierten Übergangsmetallverbindung Katalysatorsystems umfaßt die folgenden Schritte:
a) Herstellung einer kovalent fixierten Übergangsmetallverbindung /Cokatalysator-Mischung in einem geeigneten Löse- oder Suspensionsmittel, wobei die kovalent fixierte Übergangsmetallverbindungs -Komponente eine der zuvor beschriebenen Strukturen besitzt.
b) Entfernen des Hauptanteils an Lösemittel von der resultierenden Mischung
c) Isolierung des geträgerten Katalysatorsystems
d) Gegebenenfalls eine Vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösemittel für die Herstellung der kovalent fixierten Übergangsmetallverbindung /Cokatalysator-Mischung sind Kohlenwasserstoffe und Kohlenwasserstoffgemische, die bei der gewählten Reaktionstemperatur flüssig sind und in denen sich mindestens eine der Einzelkomponenten bevorzugt löst. Die Löslichkeit der Einzelkomponenten ist aber keine Voraussetzung, wenn sichergestellt ist, daß das Reaktionsprodukt aus Übergangsmetallverbindung - und Cokatalysatorkomponenten in dem gewählten Lösemittel löslich ist. Beispiele für geeignete Lösemittel umfassen Alkane wie Pentan, Isopentan, Hexan, Heptan, Octan, und Nonan; Cycloalkane wie Cyclopentan und Cyclohexan; und Aromaten wie Benzol, Toluol. Ethylbenzol und Diethylbenzol. Ganz besonders bevorzugt ist Toluol.
Die bei der Präparation des geträgerten Katalysatorsystems eingesetzten Mengen an Aluminoxan und Übergangsmetallverbindung können über einen weiten Bereich variiert werden. Bevorzugt wird ein molares Verhältnis von Aluminium zum Übergangsmetall in den Übergangsmetallverbindungen von 10 : 1 bis 1000 : 1 eingestellt, ganz besonders bevorzugt ein Verhältnis von 50 : 1 bis 500 : 1.

Im Fall von Methylaluminoxan werden bevorzugt 30 % ige toluolische Lösungen eingesetzt; die Verwendung von 10 %igen Lösungen ist aber auch möglich.
Zur Voraktivierung wird die kovalent fixierte Übergangsmetallverbindung in Form eines Feststoffes in einer Lösung des Aluminoxans in einem geeigneten Lösemittel suspendiert. Es ist auch möglich, die kovalent fixierte Übergangsmetallverbindung getrennt in einem geeigneten Lösemittel zu suspendieren und diese Lösung anschließend mit der Aluminoxan-Lösung zu vereinigen. Bevorzugt wird Toluol verwendet.
Die Voraktivierungszeit beträgt 1 Minute bis 200 Stunden.
Die Voraktivierung kann bei Raumtemperatur (25 °C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50 und 100 °C.
Das Volumen der voraktivierten Lösung bzw. des kovalent fixierten Übergangsmetallverbindung/ -Cokatalysatorgemisches kann 100 % des Gesamtporenvolumens des eingesetzten Trägermaterials überschreiten oder aber bis zu 100 % des Gesamtporenvolumens betragen.
Anschließend wird das Lösemittel vollständig oder zum größten Teil vom geträgerten Katalysatorsystem entfernt, wobei die Mischung gerührt und gegebenenfalls auch erhitzt werden kann. Bevorzugt wird sowohl der sichtbare Anteil des Lösemittels als auch der Anteil in den Poren des Trägermaterials entfernt. Das Entfernen des Lösemittels kann in konventioneller Art und Weise unter Anwendung von Vakuum und/oder Spülen mit Inertgas erfolgen. Beim Trocknungsvorgang kann die Mischung erwärmt werden, bis das freie Lösemittel entfernt worden ist, was üblicherweise 1 bis 3 Stunden bei einer vorzugsweise gewählten Temperatur zwischen 30 und 60 °C erfordert. Das freie Lösemittel ist der sichtbare Anteil an Lösemittel in der Mischung. Unter Restlösemittel versteht man den Anteil, der in den Poren eingeschlossen ist. Alternativ zu einer vollständigen Entfernung des Lösemittels kann das geträgerte Katalysatorsystem auch nur bis zu einem gewissen Restlösemittelgehalt getrocknet werden, wobei das freie Lösemittel vollständig entfernt worden ist. Anschließend kann das geträgerte Katalysatorsystem mit einem niedrig siedenden Kohlenwasserstoff wie Pentan oder Hexan gewaschen und erneut getrocknet werden.

Das erfindungsgemäß dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist beispielsweise in WO 94/28034 beschrieben.
Als Additiv kann während oder nach der Herstellung des geträgerten Katalysatorsystems eine geringe Menge eines Olefins bevorzugt eines α-Olefins (beispielsweise Vinylcyclohexan, Styrol oder Phenyldimethylvinylsilan) als modifizierende Komponente oder ein Antistatikum (wie in US Serial No. 08/365280 beschrieben) zugesetzt werden. Das molare Verhältnis von Additiv zu metallorganischer Komponente Verbindung I beträgt dabei bevorzugt zwischen 1 : 1000 bis 1000 : 1, ganz besonders bevorzugt 1 : 20 bis 20 : 1.

Die vorliegende Erfindung betrifft auch ein Verfahren zur Herstellung eines Polyolefins durch Polymerisation einer oder mehrerer Olefine in Gegenwart des erfindungsgemäßen Katalysatorsystems, enthaltend mindestens eine Übergangsmetallkomponente der Formel VII. Unter dem Begriff Polymerisaton wird eine Homopolymerisation wie auch eine Copolymerisation verstanden.

Bevorzugt werden Olefine der Formel Rₘ-CH=CH-Rₙ polymerisiert, worin Rₘ und Rₙ gleich oder verschieden sind und ein Wasserstoffatom oder einen kohlenstoffhaltigen Rest mit 1 bis 20 C-Atomen, insbesondere 1 bis 10 C-Atome, bedeuten, und Rₘ und Rₙ zusammen mit den sie verbindenden Atomen einen oder mehrere Ringe bilden können.
Beispiele für solche Olefine oder funktionalisierte Olefine sind 1-Olefine mit 2 - 20, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen ,Norbornadien, Ethylnorbornadien und cyclische Olefine wie Norbornen, Tetracyclododecen oder Methylnorbornen, Vinylacetat, Methylmethacrylat. Bevorzugt werden in dem erfindungsgemäßen Verfahren Ethen oder Propen homopolymerisiert, oder Propen mit Ethen und/oder mit einem oder mehreren 1-Olefinen oder funktioanlisierten Olefinen mit 4 bis 20 C-Atomen, wie Buten, Hexen, Styrol oder Vinylcyclohexan, Vinylacetat, Methylmethacrylat und/oder einem oder mehreren Dienen mit 4 bis 20 C-Atomen, wie 1,4-Butadien, Norbornadien, Ethylidennorbonen oder Ethylnorbornadien, copolymerisiert. Beispiele solcher Copolymere sind Ethen/Propen-Copolymere, Ethen/Norbornen, Ethen/Styrol oder Ethen/Propen/1,4-Hexadien-Terpolymere.
Die Polymerisation wird bei einer Temperatur von 0 bis 300 °C, bevorzugt 50 bis 200 °C, ganz besonders bevorzugt 50 - 80 °C durchgeführt. Der Druck beträgt 0,5 bis 2.000 bar, bevorzugt 5 bis 64 bar.
Die Polymerisation kann in Lösung, in Masse, in Suspension oder in der Gasphase, kontinuierlich oder diskontinuierlich, ein- oder mehrstufig durchgeführt werden.
Das erfindungsgemäß dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung des Monomeren von Substanzen, die die Katalysatoraktivität beeinträchtigen können. Die Menge der zugesetzten Alkylverbindung hängt von der Qualität der eingesetzten Monomere ab. Als Molmassenregler und/oder zur Steigerung der Aktivität wird, falls erforderlich, Wasserstoff zugegeben.
Das Katalysatorsystem kann dem Polymerisationssystem pur zugeführt werden oder zur besseren Dosierbarkeit mit inerten Komponenten wie Paraffinen, Ölen oder Wachsen versetzt werden. Bei der Polymerisation kann außerdem ein Antistatikum zusammen mit oder getrennt von dem eingesetzten Katalysatorsystem in das Polymerisationssystem eindosiert werden.
Die mit dem erfindungsgemäßen Katalysatorsystem dargestellten Polymere zeigen eine gleichmäßige Kornmorphologie und weisen keine Feinkornanteile auf. Bei der Polymerisation mit dem erfindungsgemäßen Katalysatorsyatem treten keine Beläge oder Verbackungen auf.
Die durch Einsatz des erfindungsgemäßen Katalysatorsystems erhaltenen Copolymere sind mit hoher Produktivität bei technisch relevanten Prozessparametern ohne Belagsbildung herstellbar. Sie ermöglichen so die Herstellung von Copolymeren mit hohem Comonomereneinbau und hoher Molmasse.

Die Erfindung wird durch folgende, die Erfindung jedoch nicht einschränkenden Beispiele erläutert.

Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösemittel wurden vor Gebrauch mit Argon gespült und über Molsieb absolutiert.

Die Darstellung der Imin-Edukte verläuft nach denen in der Literatur beschriebenen Verfahren. Beispiele finden sich hier z.B. unter Chem. Rev. 1963, 63, 489-510. Zum teil handelt es sich um käuflich zu erwerbende Chemikalien.

### Darstellung der kovalent geträgerten Imine:

### 1. Umsetzung von Lichroprep NH₂ mit Salicylaldehyd

Es werden 0.192 g (1.57 mmol) Salicylaldehyd in 30 ml Methanol vorgelegt und mit 20 µl Eisessig versetzt. Anschließend werden 2.01 g des Polymerträgers Lichroprep NH₂ (Merck) als Feststoff bei Raumtemperatur zugegeben. Die Reaktionssuspension wird anschließend sieben Stunden refluxiert und danach bei Raumtemperatur über Nacht gerührt. Die Suspension wird anschließend über einer G3 Fritte filtriert, und der nun gelbe Feststoff zweimal mit jeweils 5 ml Methanol gewaschen. Der gelbe Feststoff wird bis zur Gewichtskonstanz im Ölpumpenvakuum getrocknet. Es wurden 2.14 g isoliert.

### 2. Umsetzung des modifizierten Trägers zum kovalent geträgerten Metallkomplex

Es werden 2 g des ober hergestellten Trägers in 100 ml THF suspendiert und auf -78°C gekühlt. Anschließend wird tropfenweise 0,242 ml einer 2.5 M Buthyllithiumlösung zugegeben. Man läßt nach beendeter Zugabe auf Raumtemperatur erwärmen und rührt die Suspension 2 Stunden bei dieser Temperatur. Anschließend wird die Reaktionsmischung aug 0°C heruntergekühlt und tropfenweise mit einer Lösung aus 0.083 g (0.26 mmol) ZrCl₄*DME in 100 ml THF versetzt. Man läßt auf Raumtemperatur erwärmen und rührt über Nacht. Der Niederschlag wir über einer G3 Fritte isoliert und 2 mal mit jeweils 25 ml THF gewaschen. Danach wird der gelbe Feststoff bis zur Gewichtskonstanz im Ölpumpenvakuum getrocknet. Man isoliert 2.08g des kovalent geträgerten Komplexes.

## Patentansprüche

1. Verbindungen der Formel (I) 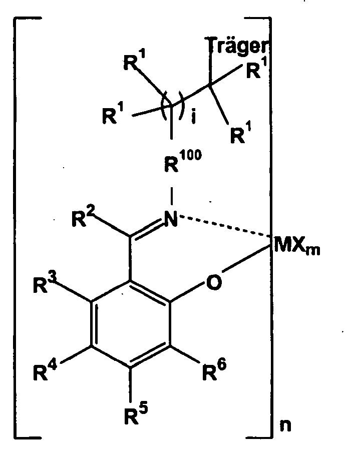 worin
M ein Metall der III., IV., V. oder VI. Nebengruppe des Periodensystems der Elemente ist,
R¹ ein Wasserstoffatom ist,
R², R³, H⁴, R⁵, R⁶ gleich oder verschieden sind und ein Wasserstoffatom, ein Halogenatom oder Si(R¹⁰)₃ sind, worin R¹⁰ gleich oder verschieden und ein Wasserstoffatom oder eine C₁-C₄₀-kohlenstoffhaltige Gruppe sind, oder R¹, R², R³, R⁴, R⁵, R⁶ gleich oder verschieden sind und eine C₁-C₃₀ - kohlenstoffhaltige Gruppe ist, oder zwei oder mehrere Reste R¹ und/oder zwei oder mehrere Reste R² bis R⁶ so miteinander verbunden sein können, daß die Reste R¹ oder R² bis R⁶ und R¹⁰ und die sie verbindenden Atome ein C₄-C₂₄-Ringsystem bilden, welches seinerseits substituiert sein kann, und
R¹⁰⁰ gleich oder verschieden sind und eine C₁-C₄₀-kohlenstoffhaltige Gruppe sein können, und
n eine ganze Zahl von 1 bis 4, und
m eine ganze Zahl von 0 bis 4, und
i eine ganze Zahl von 1 bis 100, und
X gleich oder verschieden sein können und ein Wasserstoffatom, eine C₁-C₁₀-Kohlenwasserstoffgruppe, bevorzugt C₁-C₁₀-Alkyl oder C₆-C₁₀-Aryl, ein Halogenatom, oder OR⁹, SR⁹, OSiR₃⁹, SiR₃⁹, PR₂⁹ oder NR₂⁹ bedeuten, worin R⁹ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, und
"Träger" Silica ist, an welches die Gruppen -(CR¹₂)ᵢ-CR¹₂ folgendermaßen angebunden sind: -(CR¹₂)ᵢ-CR¹₂-O-Si- Träger.

2. Verbindungen gemäß Anspruch 1, **dadurch gekennzeichnet, daß**
M gleich Ti, Zr oder Hf ist und
R¹, R², R³, R⁴, R⁵, R⁶ gleich oder verschieden sind und ein Wasserstoffatom, ein Halogenatom oder Si(R¹⁰)₃ sind, worin R¹⁰ gleich oder verschieden ein Wasserstoffatom oder eine C₁-C₄₀-kohlenstofihaltige Gruppe die die oben stehenden Bedeutungen hat oder R¹, R², R³, R⁴, R⁵, R⁶ gleich oder verschieden sind und eine C₁-C₃₀ - kohlenstoffhaltige Gruppe die die oben stehenden Bedeutungen hat, und oder zwei oder mehrere Reste R¹ und/oder zwei oder mehrere Reste R² bis R⁶ so miteinander verbunden sein können, daß die Reste R¹ oder R² bis R⁶ und R¹⁰ und die sie verbindenden Atome ein C₄-C₂₄-Ringsystem bilden, welches seinerseits substituiert sein kann, und
R¹⁰⁰ gleich oder verschieden sind und eine C₁-C₄₀-kohlenstoffhaltige Gruppe ist und,
n eine ganze Zahl von 1 bis 4, und
m eine ganze Zahl von 0 bis 4, und
i eine ganze Zahl von 1 bis 100, und
X ein Halogenatom, insbesondere Chlor ist oder eine C₁-C₁₈-Alkylgruppe ist, besonders bevorzugt Methyl, Ethyl, n- oder i-Propyl, tert.-Butyl, n-Pentyl, n-Hexyl, Cyclohexyl oder Octyl, oder eine C₆-C₁₅- Arylgruppe, oder substituierte oder unsubstituierte Phenolate ist.

3. Verbindungen gemäß Anspruch 1 oder 2, **dadurch gekennzeichnet, daß**
M gleich Zirkonium ist,
R¹, R², R³, R⁴, R⁵, R⁶ ein Wasserstoffatom oder eine lineare oder verzweigte C₁-C₁₂-Alkylgruppe, bevorzugt Methyl, Ethyl, n-Butyl, n-Hexyl, Isopropyl, Isobutyl, Isopentyl, Cyclohexyl, Cyclopentyl oder Octyl ist, besonders bevorzugt Methyl, Ethyl, Isopropyl oder Cyclohexyl ist, oder ein Halogenatom oder C₅-C₁₈-Heteroaryl, oder eine C₇-C₁₂-Arylalkyl, oder eine C₇-C₁₂-Alkylaryl, oder ein fluorhaltiges C₁-C₈-Alkyl, oder ein fluorhaltiges C₆-C₁₈-Aryl, oder ein fluorhaltiges C₇-C₁₂-Arylalkyl oder fluorhaltiges C₇-C₁₂-Alkylaryl ist, und
R¹⁰⁰ gleich oder verschieden ist und für C₁-C₂₀-Alkyl, insbesondere Methylen, Ethylen, C₁-C₁₀-Fluoralkyl, C₁-C₁₀-Alkoxy, C₆-C₂₀-Aryl, insbesondere Phenyl, Biphenyl, C₆-C₁₀-Fluoraryl, insbesondere 1,2,4,5-Tetrafluorophenyl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl, fluorhaltiges C₁-C₂₅-Alkyl steht, und
n 2 ist, und
m 2 ist, und
i 3, 4, 5, 6, 7, 8, 9 oder 10 ist, und
X ein Halogenatom, insbesondere Chlor ist, oder eine C₁-C₁₈-Alkylgruppe, insbesondere Methyl, Ethyl, n-Butyl, n-Hexyl, Isopropyl, Isobutyl, Isopentyl, Cyclohexyl, Cyclopentyl oder Octyl ist oder eine C₆-C₁₅-Arylgruppe ist, oder substituierte oder unsubstituierte Phenolate ist.

4. Katalysatorsystem enthaltend mindestens eine Verbindung gemäß Anspruch 1 bis 3 und mindestens einen Cokatalysator.

5. Katalysatorsystem gemäß Anspruch 4, **dadurch gekennzeichnet, dass** als Cokatalysator mindestens eine Verbindung vom Typ eines Aluminoxans oder einer Lewis-Säure oder einer ionischen Verbindung eingesetzt wird, die durch Reaktion mit Verbindungen der Formel (I) diese in kationische Verbindungen überführen.

6. Verwendung eines Katalysatorsystems gemäß Anspruch 4 oder 5 zur Polymerisation von Olefinen.

7. Verwendung gemäß Anspruch 6, **dadruch gekennzeichnet, dass** das Olefin der Formel Rₘ-CH=CH-Rₙ entspricht, worin Rₘ und Rₙ gleich oder verschieden sind und ein Wasserstoffatom oder einen kohlenstoffhaltigen Rest mit 1 bis 20 C-Atomen, insbesondere 1 bis 10 C-Atome, bedeuten, und Rₘ und Rₙ zusammen mit den sie verbindenden Atomen einen oder mehrere Ringe bilden können.

8. Verfahren zur Polymerisation von Olefinen in Gegenwart von mindestens einer Verbindung gemäß Anspruch 1 bis 3 und/oder eines Katalysatorsystems gemäß Anspruch 4 oder 5.

## Claims

1. Compounds of the formula (I) 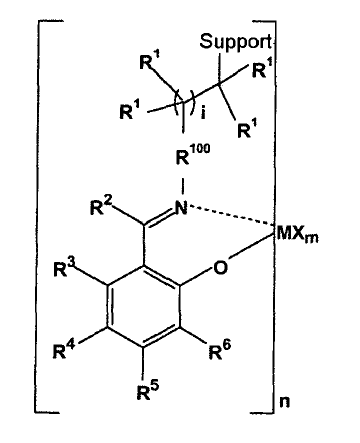 where
M is a metal of transition group III, IV, V or VI of the Periodic Table of the Elements,
R¹ is a hydrogen atom,
R² R³ R⁴, R⁵, R⁶ are identical or different and are each a hydrogen atom, a halogen atom or Si(R¹⁰)₃, where the radicals R¹⁰ are identical or different and are each a hydrogen atom or a C₁-C₄₀ group, or R¹, R², R³, R⁴, R⁵, R⁶ are identical or different and are each a C₁-C₃₀ group, or two or more radicals R¹ and/or two or more radicals R² to R⁶ can be joined to one another in such a way that the radicals R¹ or R² to R⁶ and R¹⁰ and the atoms connecting them form a C₄-C₂₄ ring system which may in turn be substituted, and
the radicals R¹⁰⁰ are identical or different and can each be a C₁-C₄₀ group, and
n is an integer from 1 to 4, and
m is an integer from 0 to 4, and
i is an integer from 1 to 100, and
the radicals X can be identical or different and are each a hydrogen atom, a C₁-C₁₀-hydrocarbon group, preferably C₁-C₁₀-alkyl or C₆-C₁₀-aryl, a halogen atom or OR⁹, SR⁹, OSiR₃⁹, SiR₃⁹, PR₂⁹ or NR₂⁹, where R⁹ is a halogen atom, a C₁-C₁₀-alkyl group, a halogenated C₁-C₁₀-alkyl group, a C₆-C₂₀-aryl group or a halogenated C₆-C₂₀-aryl group, and "Support" is silica to which the groups -(CR¹₂);-CR¹₂ are bound as follows: -(CR¹₂)ᵢ-CR¹₂-O-Si-Support.

2. Compounds according to Claim 1, **characterized in that**
M is Ti, Zr or Hf and
R¹, R², R³, R⁴, R⁵, R⁶ are identical or different and are each a hydrogen atom, a halogen atom or Si(R¹⁰)₃, where the radicals R¹⁰ are identical or different and are each a hydrogen atom or a C₁-C₄₀ group as defined above or R¹, R², R³, R⁴, R⁵, R⁶ are identical or different and are each a C₁-C₃₀ group as defined above, or two or more radicals R¹ and/or two or more radicals R² to R⁶ can be joined to one another in such a way that the radicals R¹ or R² to R⁶ and R¹⁰ and the atoms connecting them form a C₄-C₂₄ ring system which may in turn be substituted, and
the radicals R¹⁰⁰ are identical or different and are each a C₁-C₄₀ group, and
n is an integer from 1 to 4, and
m is an integer from 0 to 4, and
i is an integer from 1 to 100, and
X is a halogen atom, in particular chlorine, or a C₁-C₁₈ alkyl group, particularly preferably methyl, ethyl, n- or i-propyl, tert-butyl, n-pentyl, n-hexyl, cyclohexyl or octyl, or a C₆-C₁₅-aryl group, or substituted or unsubstituted phenoxides.

3. Compounds according to Claim 1 or 2, **characterized in that**
M is zirconium,
R¹, R², R³, R⁴, R⁵, R⁶ are each a hydrogen atom or a linear or branched C₁-C₁₂-alkyl group, preferably methyl, ethyl, n-butyl, n-hexyl, isopropyl, isobutyl, isopentyl, cyclohexyl, cyclopentyl or octyl, particularly preferably methyl, ethyl, isopropyl or cyclohexyl, or a halogen atom or C₅-C₁₈-heteroaryl, or C₇-C₁₂-arylalkyl, or C₇-C₁₂-alkylaryl, or fluorinated C₁-C₈-alkyl, or fluorinated C₆-C₁₈-aryl, or fluorinated C₇-C₁₂-arylalkyl or fluorinated C₇-C₁₂-alkylaryl, and
the radicals R¹⁰⁰ are identical or different and are each C₁-C₂₀-alkyl, in particular methylene, ethylene, C₁-C₁₀-fluoroalkyl, C₁-C₁₀-alkoxy, C₆-C₂₀-aryl, in particular phenyl, biphenyl, C₆-C₁₀-fluoroaryl, in particular 1,2,4,5-tetrafluorophenyl, C₆-C₁₀-aryloxy, C₂-C₁₀-alkenyl, C₇-C₄₀-arylalkyl, C₇-C₄₀-alkylaryl or C₈-C₄₀-arylaikenyl, fluorinated C₁-C₂₅-alkyl, and
n is 2, and
m is 2, and
i is 3, 4, 5, 6, 7, 8, 9 or 10, and
X is a halogen atom, in particular chlorine, or a C₁-C₁₈-alkyl group, in particular methyl, ethyl, n-butyl, n-hexyl, isopropyl, isobutyl, isopentyl, cyclohexyl, cyclopentyl or octyl, or a C₆-C₁₅-aryl group, or substituted or unsubstituted phenoxides.

4. Catalyst system comprising at least one compound according to any of Claims 1 to 3 and at least one cocatalyst.

5. Catalyst system according to Claim 4, **characterized in that** at least one compound such as an aluminoxane or a Lewis acid or an ionic compound which reacts with compounds of the formula (I) to convert them into cationic compounds is used as cocatalyst.

6. Use of a catalyst system according to Claim 4 or 5 for the polymerization of olefins.

7. Use according to Claim 6, **characterized in that** the olefin has the formula Rₘ-CH=CH-Rₙ, where Rₘ and Rₙ are identical or different and are each a hydrogen atom or a carbon-containing radical having from 1 to 20 carbon atoms, in particular from 1 to 10 carbon atoms, and Rₘ and Rₙ together with the atoms connecting them can form one or more rings.

8. Process for polymerizing olefins in the presence of at least one compound according to any of Claims 1 to 3 and/or a catalyst system according to Claim 4 or 5.

## Revendications

1. Composés de formule (I) 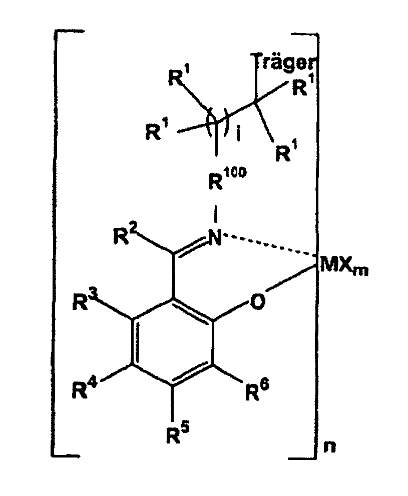 dans laquelle
M est un métal du groupe III, IV, V ou VI du système périodique des éléments,
R¹ est un atome d'hydrogène,
R², R³, R⁴, R⁵, R⁶ sont identiques ou différents et représentent un atome d'hydrogène, un atome d'halogène ou Si(R¹⁰)₃, où les radicaux R¹⁰ sont identiques ou différents et représentent un atome d'hydrogène ou un groupe carboné en C₁-C₄₀, ou R¹, R², R³, R⁴, R⁵, R⁶ sont identiques ou différents et représentent un groupe carboné en C₁-C₃₀, ou deux ou plus de deux radicaux R¹ et/ou deux ou plus de deux radicaux R² à R⁶ peuvent être liés entre eux de sorte que les radicaux R¹ ou R² à R⁶ et R¹⁰ et les atomes qui les relient forment un système cyclique en C₄-C₂₄ qui peut pour sa part être substitué, et
R¹⁰⁰ sont identiques ou différents et peuvent représenter un groupe carboné en C₁-C₄₀, et
n est un nombre entier allant de 1 à 4, et
m est un nombre entier allant de 0 à 4, et
i est un nombre entier allant de 1 à 100, et
X peuvent être identiques ou différents et représentent un atome d'hydrogène, un groupe hydrocarboné en C₁-C₁₀, de préférence un groupe alkyle en C₁-C₁₀ ou aryle en C₆-C₁₀, un atome d'halogène, ou OR⁹, SR⁹, OSiR₃⁹, SiR₃⁹, PR₂⁹ ou NR₂⁹, où R⁹ représente un atome d'halogène, un groupe alkyle en C₁-C₁₀, un groupe alkyle en C₁-C₁₀ halogéné, un groupe aryle en C₆-C₂₀ ou un groupe aryle en C₆-C₂₀ halogéné, et
"Träger" (support) représente de la silice à laquelle sont liés les groupes -(CR¹₂)ᵢ-CR¹₂, comme suit : -(CR¹₂)ᵢ-CR¹₂-O-Si-support.

2. Composés selon la revendication 1, **caractérisés en ce que**
M représente Ti, Zr ou Hf,
R¹, R², R³, R⁴, R⁵, R⁶ sont identiques ou différents et représentent un atome d'hydrogène, un atome d'halogène ou Si(R¹⁰)₃, où les radicaux R¹⁰ sont identiques ou différents et représentent un atome d'hydrogène ou un groupe carboné en C₁-C₄₀ qui a les significations données plus haut, ou R¹, R², R³, R⁴, R⁵, R⁶ sont identiques ou différents et représentent un groupe carboné en C₁-C₃₀ qui a les significations données plus haut, ou deux ou plus de deux radicaux R¹ et/ou deux ou plus de deux radicaux R² à R⁶ peuvent être liés entre eux de sorte que les radicaux R¹ ou R² à R⁶ et R¹⁰ et les atomes qui les relient forment un système cyclique en C₄-C₂₄ qui peut pour sa part être substitué, et
R¹⁰⁰ sont identiques ou différents et représentent un groupe carboné en C₁-C₄₀, et
n est un nombre entier allant de 1 à 4, et
m est un nombre entier allant de 0 à 4, et
i est un nombre entier allant de 1 à 100, et
X représente un atome d'halogène, en particulier de chlore, ou un groupe alkyle en C₁-C_{18,} de façon particulièrement préférée le groupe méthyle, éthyle, n-propyle ou isopropyle, tert-butyle, n-pentyle, n-hexyle, cyclohexyle ou octyle, ou un groupe aryle en C₆-C₁₅, ou des phénolates substitués ou non substitués.

3. Composés selon la revendication 1 ou 2,
**caractérisés en ce que**
M représente le zirconium,
R¹, R², R³, R⁴, R⁵, R⁶ représentent un atome d'hydrogène ou un groupe alkyle en C₁-C₁₂ linéaire ou ramifié, de préférence le groupe méthyle, éthyle, n-butyle, n-hexyle, isopropyle, isobutyle, isopentyle, cyclohexyle ou octyle, de façon particulièrement préférée le groupe méthyle, éthyle, isopropyle ou cyclohexyle, ou un atome d'halogène ou un groupe hétéroaryle en C₅-C₁₈, ou un groupe arylalkyle en C₇-C₁₂ ou un groupe alkylaryle en C₇-C₁₂ ou un groupe alkyle en C₁-C₈ fluoré, ou un groupe aryle en C₆-C₁₈ fluoré ou un groupe arylalkyle en C₇-C₁₂ fluoré ou un groupe alkylaryle en C₇-C₁₂ fluoré et
R¹⁰⁰ est le même ou différent et représente un groupe alkyle en C₁-C₂₀, en particulier méthylène, éthylène, fluoroalkyle en C₁-C₁₀, alcoxy en C₁-C₁₀, aryle en C₆-C₂₀, en particulier phényle, biphényle, fluoroaryle en C₆-C₁₀, en particulier 1,2,4,5-tétrafluorophényle, aryloxy en C₆-C₁₀, alcényle en C₂-C₁₀, arylalkyle en C₇-C₄₀, alkylaryle en C₇-C₄₀ ou arylalcényle en C₈-C₄₀, alkyle en C₁-C₂₅ fluoré, et
n est égal à 2, et
m est égal à 2, et
i est égal à 3, 4, 5, 6, 7, 8, 9 ou 10, et
X représente un atome d'halogène, en particulier de chlore, ou un groupe alkyle en C₁-C₁₈, en particulier le groupe méthyle, éthyle, n-butyle, n-hexyle, isopropyle, isobutyle, isopentyle, cyclohexyle, cyclopentyle ou octyle, ou un groupe aryle en C₆-C₁₅, ou des phénolates substitués ou non substitués.

4. Système catalytique contenant au moins un composé selon l'une quelconque des revendications 1 à 3 et au moins un co-catalyseur.

5. Système catalytique selon la revendication 4,
**caractérisé en ce qu'**on utilise comme co-catalyseur au moins un composé du type d'un aluminoxane ou d'un acide de Lewis ou d'un composé ionique, qui, en réagissant avec des composés de formule (I), les convertissent en composés cationiques.

6. Utilisation d'un système catalytique selon la revendication 4 ou 5, pour la polymérisation d'oléfines.

7. Utilisation selon la revendication 6, **caractérisée en ce que** l'oléfine correspond à la formule Rₘ-CH=CH-Rₙ, dans laquelle Rₘ et Rₙ sont identiques ou différents et représentent un atome d'hydrogène
ou un radical carboné ayant de 1 à 20 atomes de carbone, en particulier de 1 à 10 atomes de carbone, et Rₘ et Rₙ peuvent former ensemble, avec les atomes qui les relient, un ou plusieurs cycles.

8. Procédé pour la polymérisation d'oléfines en présence d'au moins un composé selon l'une quelconque des revendications 1 à 3 et/ou d'un système catalytique selon la revendication 4 ou 5.
